(19) Europäisches Patentamt
European Patent Office
Office européen des brevets

(11) EP 2 878 631 B1

(12) **EUROPÄISCHE PATENTSCHRIFT**

(45) Veröffentlichungstag und Bekanntmachung des Hinweises auf die Patenterteilung:
**15.01.2020 Patentblatt 2020/03**

(21) Anmeldenummer: **14194193.0**

(22) Anmeldetag: **20.11.2014**

(51) Int Cl.:
***C08L 77/06*** *(2006.01)*
*C08K 7/14* *(2006.01)*
*C08K 5/04* *(2006.01)*
*C08K 5/00* *(2006.01)*
*C08K 5/5313* *(2006.01)*
*C08K 3/38* *(2006.01)*
*C08K 5/3492* *(2006.01)*

(54) **Polyamid Zusammensetzungen**

Polyamide compositions

Compositions en polyamide

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.11.2013 EP 13194835**

(43) Veröffentlichungstag der Anmeldung:
**03.06.2015 Patentblatt 2015/23**

(73) Patentinhaber: **LANXESS Deutschland GmbH**
**50569 Köln (DE)**

(72) Erfinder:
- **Immel, Timo**
**41539 Dormagen (DE)**
- **Endtner, Jochen**
**50679 Köln (DE)**
- **Bienmüller, Matthias**
**47803 Krefeld (DE)**

(56) Entgegenhaltungen:
**EP-A1- 0 997 496**
**WO-A1-99/45070**
**WO-A1-2004/090036**
**WO-A1-2013/014144**
**WO-A1-2013/188488**
**WO-A2-2011/126794**

- **Gregory Lau: "Material Selection of Electronic Components - Zytel High Temperature Nylon HTN and Zentie", Power Electronics Systems and Applications, 2006. ICPESA '06. 2nd International Conference on,20061101 , 1. November 2006 (2006-11-01), XP055116161, Gefunden im Internet: URL:http://www.eeic.org/member/papers/DuPontIEEEpaper.pdf [gefunden am 2014-05-02]**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft Zusammensetzungen auf Basis von Polyamidblends und Zusatzstoffen, die Verwendung dieser Zusammensetzungen in Formmassen zur Herstellung kurzzeitwärmeformbeständiger Erzeugnisse, sowie ein Verfahren zur Herstellung kurzzeitwärmeformbeständiger Polyamid-basierter Erzeugnisse, insbesondere für Elektro- oder Elektronikanwendungen.

## Stand der Technik

Viele elektronische und elektrische Baugruppen und Komponenten umfassen temperaturempfindliche elektrische und/oder elektronische Erzeugnisse, insbesondere wärmeempfindliche integrierte Schaltkreise, Oszillatorkristalle, sowie optoelektronische Erzeugnisse. Im Zuge der Montage einer solchen Baugruppe müssen die an den Erzeugnissen vorgesehenen elektrischen Kontakte prozesssicher mit Leiterbahnen einer Platine und/oder mit elektrischen Kontakten anderer Erzeugnisse verbunden werden. Diese Montage erfolgt häufig mit Hilfe eines Lötverfahrens, bei dem am Erzeugnis vorgesehene Lötanschlüsse mit der Platine verlötet werden. Für jedes Erzeugnis ergibt sich dabei ein sicherer Bereich für die Lötzeit und Löttemperatur, in der gute Lötverbindungen hergestellt werden können. Um ein gutes Lötergebnis zu erreichen, müssen die Erzeugnisse während des Lötens über längere Zeiten hinweg erhöhten Temperaturen ausgesetzt werden. So wird z.B. beim Wellenlöten das auf die Platine gesteckte Erzeugnis zunächst langsam auf etwa 100 °C aufgewärmt. Danach erfolgt die eigentliche Lötung, die typischerweise bei 260 bis 285 °C erfolgt und mindestens 5 Sekunden dauert, gefolgt von der Erstarrungsphase, während der das Erzeugnis über mehrere Minuten langsam abkühlt.

Gemäß "http://de.wikipedia.org/wiki/Wellenl%C3%B6ten" ist das Wellenlöten, auch als Schwalllöten bezeichnet, ein Lötverfahren, mit dem elektronische Baugruppen (Leiterplatten, Flachbaugruppen) halb- oder vollautomatisch nach dem Bestücken gelötet werden. Die Lötseite der Leiterplatte wird zunächst im Fluxer mit einem Flussmittel benetzt. Danach wird die Leiterplatte mittels Konvektionsheizung (Verwirbelung der Wärme, wodurch praktisch überall, auch auf der Oberseite, die gleiche Temperatur anliegt), Wendelheizung oder Infrarot-Strahlern vorgeheizt. Dies geschieht zum einen, um den Lösungsmittelanteil des Flussmittels zu verdampfen (sonst Blasenbildung beim Lötvorgang), die chemische Wirkung der Aktivatoren zu erhöhen und um einen Temperaturverzug der Baugruppe sowie Schädigung der Bauteile durch einen zu steilen Temperaturanstieg beim nachfolgenden Löten zu vermeiden.

Genaue Daten ergeben sich durch Temperaturprofile. Dabei werden an einer Musterplatine Temperaturfühler an relevanten Punkten angebracht und mit einem Messgerät aufgezeichnet. So erhält man Temperaturkurven für die Platinenoberseite und Platinenunterseite für ausgewählte Bauteile. Im Anschluss daran wird die Baugruppe über eine oder zwei Lötwellen gefahren. Die Lötwelle wird durch Pumpen von flüssigem Lot durch eine Öffnung erzeugt. Die Löttemperatur liegt bei bleihaltigen Loten bei ca. 250 °C, bei den wegen der Verhinderung bleihaltiger Dämpfe bevorzugt zu verwendenden bleifreien Loten ca. 10 °C bis 35 °C höher, also bei 260 °C bis 285 °C.

Die Lötzeit ist so zu wählen, dass die Erwärmung weder die Leiterplatte noch die wärmeempfindlichen Bauelemente schädigt. Die Lötzeit ist die Berührzeit des flüssigen Lotes pro Lötstelle. Die Richtzeiten betragen für einseitig kaschierte Leiterplatten weniger als eine Sekunde und bei zweiseitig kaschierten Leiterplatten nicht mehr als zwei Sekunden. Bei Mehrleiterplatten gelten individuelle Lötzeiten bis hin zu sechs Sekunden. Nach DIN EN 61760-1: 1998 ist die maximale Zeit für eine oder auch zwei Wellen zusammen 10 Sekunden. Genauere Details sind der oben genannten Literaturstelle zu entnehmen. Nach dem Löten ist eine Kühlung der Baugruppe sinnvoll, um die thermische Belastung schnell wieder zu verringern. Dies geschieht über eine direkte Kühlung durch ein Kühlaggregat (Klimaanlage) unmittelbar nach dem Lötbereich und/oder durch konventionelle Lüfter in der Senkstation oder einem Kühltunnel im Rücklaufband.

Hieraus ergeben sich an die verwendeten Materialien, insbesondere für die aus ökologischen Gründen immer häufiger eingesetzten bleifreien Lote mit erhöhten Schmelzbereichen, hohe Anforderungen hinsichtlich der Kurzzeitwärmeformbeständigkeit. Des Weiteren müssen derartige Materialien eine sehr gute Alterungsbeständigkeit unter den bei der Anwendung auftretenden Temperaturen haben.

Thermoplastische Polyamide wie Polyamid 6 (PA6) und Polyamid 66 (PA66) sind wegen ihrer guten Verarbeitbarkeit, der hohen mechanischen Belastbarkeit, ihrer Beständigkeit gegen eine Vielzahl von Prozesschemikalien, insbesondere aber auch wegen ihrer hohen Hydrolysestabilität, für Elektro- und Elektronikanwendungen besonders geeignet. Dies gilt insbesondere auch für Anwendungen im Außenbereich. Allerdings stoßen rein aliphatische Polyamide wie PA6 oder PA66 wegen ihrer Schmelzbereiche um 220 °C bzw. 260 °C rasch an ihre Grenzen, wenn im Herstellungsprozess von elektrischen oder elektronischen Erzeugnissen.- wie etwa beim Verlöten mit bleifreien Loten - Prozessschritte mit Temperaturen oberhalb des Schmelzpunktes dieser Polyamide vorkommen.

Aus EP 0 997 496 A1 sind verschweißbare (Vibrationsschweißen) Zusammensetzungen bekannt, die eine Mischung aus PA66, PA6T/12, Glasfasern und einem Thermostabilisator (CuI/KI) enthalten.

WO 2011/126794 A2 beschreibt Zusammensetzungen auf Basis von PA66, PA6T/66 und gegebenenfalls PA6I/6T, enthaltend Glasfasern und Thermostabilisatoren wie Boehmit und Zinkborat, mit guter Oberflächenerscheinung,

akzeptablen flammhemmenden Eigenschaften sowie hoher Glanzbeibehaltung bei hohen Temperaturen und feuchten Bedingungen.

WO 2013/188488 A2 führt Beispiele für Zusammensetzungen auf, die PA66, PA66/6T sowie gegebenenfalls PA6 und zusätzlich Glasfasern und einen Kupfer basierten Wärmestabilisator enthalten. Diese zeigen hohe Zugfestigkeiten nach Ofenalterung.

WO2004/090036 A1 beschreibt die Herstellung von glasfaserverstärkten, wärmestabilisierten flammgehemmten Polyamidformkörpern für die Elektro- und Elektronikindustrie, wie beispielsweise Bauteile die auf Printed Circuit Boards nach der Surface Mounting Technologie mit bleifreien Lötmaterialien montiert werden. Hierfür werden Zusammensetzungen aus PA6T/66, einem Flammschutzmittel (Aluminiumdimethylphosphinat), Glasfasern, einem Thermostabilisator (Irganox ® 1098) und einem Gleitmittel (Calciumstearat) vorgeschlagen.

WO 99/45070 A1 offenbart hochschmelzende Polyamid Zusammensetzungen für Elektronikanwendungen u.a. basierend auf einem Polyamid mit Schmelzpunkt von wenigstens 280 °C, einem Thermoplasten mit einem Schmelzpunkt unter 230 °C, einer halogenhaltigen organischen Verbindung und einem anorganischen Verstärkungsmittel.

WO 2013/014144 A1 beschreibt flammhemmende Polyamidzusammensetzungen auf Basis semikristalliner semiaromatischer Polyamide sowie semikristalliner aliphatischer Polyamide und einem halogenfreien Flammschutzmittel. In den Beispielen finden sich Kombinationen von PA4T/66 mit PA46 und PA4T/66 mit PA66.

Schließlich sei noch auf G.Lau, Material Selection of Electronic Components - Zytel® High Temperature Nylon HTN and Zenite® LCP, Power Electronics Systems and Applications, 2006, ICPESA ’06, 2nd International Conference on November 1, 2006 verwiesen, worin Zytel® für PA66 und HTN für PA6T steht.

Berücksichtigt man den Stand der Technik, so wäre für die bei Lötprozessen auftretenden hohen Kurzzeittemperaturen zwecks Herstellung elektronischer Erzeugnisse innerhalb der aliphatischen Polyamide ein Ausweichen auf Polyamid 4.6 (PA46) mit einem Schmelzbereich um 290 °C möglich. Allerdings ist man bei den für PA46 empfohlenen Verarbeitungstemperaturen, idealerweise zwischen 310 und 320 °C bei der Auswahl geeigneter Additive sehr eingeschränkt. Dies gilt insbesondere bei thermisch empfindlichen, aber z.B. in PA66 noch gut einsetzbaren Flammschutzmitteln wie insbesondere roter Phosphor, Melaminpolyphosphat oder Aluminiumtris(diethylphosphinat). Beim Einsatz dieser Flammschutzmittel in PA46 besteht aufgrund der höheren Verarbeitungstemperaturen ein erhöhtes Zersetzungsrisiko solcher Additive und damit z.B. eine erhöhte Neigung zu Metallkorrosion, beispielsweise im Falle der Verarbeitung von z.B. Kunststoff-Metall-Hybrid Erzeugnissen, oder Belagsbildung. Eine weitere Schwierigkeit bei PA46 ist die gegenüber PA6 und PA66 erhöhte Wasseraufnahme, die zudem auch eine stärkere Dimensionsänderung der aus PA46 hergestellten Erzeugnisse zur Folge hat.

Alternativ zu PA46 ist ein Ausweichen auf teilkristalline teilaromatische Polyamide denkbar, wie sie z.B. durch Einbau von Terephthalsäure in die Polyamidstruktur erhalten werden können. Beispiele hierfür sind PA6T/6, PA6T/66 oder PA6T/6I/66, wobei "T" für Terephthalsäure, "I" für Isophthalsäure und "/" für ein Copolymer steht. Diese Materialien bieten gegenüber PA46 den Vorteil einer geringeren Wasseraufnahme. Auch können Schmelzbereiche oberhalb von 300 °C erreicht werden. Neben den bei PA46 genannten Einschränkungen bzgl. thermisch empfindlicher Additive hat man bei den teilaromatischen Polyamiden allerdings noch Einschränkungen aufgrund der deutlich höheren Schmelzviskosität und einer verringerten Kristallisationsgeschwindigkeit zu berücksichtigen (Ludwig Bottenbruch, Rudolf Binsack (Hrsg): Technische Thermoplaste Teil 4. Polyamide. Hanser Verlag München,S. 803-809)

Die Aufgabe der vorliegenden Erfindung bestand deshalb darin, Zusammensetzungen auf Basis thermoplastischer Polyamide zur Verfügung zu stellen, die zum einen eine gegenüber PA66 verbesserte Kurzzeitwärmeformbeständigkeit aufweisen, andererseits aber mit den für PA66 üblichen niedrigen Temperaturen verarbeitbar sind, dadurch weniger Einschränkungen bei der Auswahl von thermisch empfindlichen Additiven, insbesondere Flammschutzmitteln, haben und gute mechanische Eigenschaften sowie im Falle der aus den Zusammensetzungen herzustellenden Erzeugnisse in Lötprozessen eine hohe Kurzzeitwärmeformbeständigkeit aufweisen.

Eine Kurzzeitwärmeformbeständigkeit bei einer definierten Temperatur für PA66 basierte Erzeugnisse bedeutet im Sinne der vorliegenden Erfindung, wenn ein Prüfkörper der Abmaße 20 • 13 • 1,5 mm mit senkrechten Ecken und Kanten auf einer Glasplatte für 15 min bei der zuvor definierten Temperatur keine Formveränderung erfährt und zusätzlich kein Anhaften an der Glasplatte zeigt. Zur Prüfung wird der Prüfkörper flächig auf der Glasplatte liegend für 15 min in einen auf die Zieltemperatur vorgeheizten handelsüblichen Heißluftofen eingebracht und anschließend durch die umgebende Raumluft mit einer Temperatur von 23 °C +/- 2 °C = Raumtemperatur wieder auf Raumtemperatur abgekühlt. Keine Formveränderung im Sinne der vorliegenden Erfindung bzw. Kurzzeitwärmeformbeständigkeit ist dann gegeben, wenn die Ecken und Kanten des Prüfkörpers nach der Wärmelagerung keine Abrundung oberhalb eines Radius von 0,8 mm aufweisen. Der Radius gibt dabei den Grad der Abrundung einer Ecke bzw. Kante an, indem er die Größe eines imaginären Kreises beschreibt, der so in eine Ecke bzw. Kante des Prüfkörpers hinein gelegt werden kann, dass der imaginäre Kreis die Rundung abbildet. Je größer der Radius, desto runder sind die Ecken bzw. Kanten. Kein Anhaften im Sinne der vorliegenden Erfindung ist dann gegeben, wenn der Prüfkörper nach Neigen der Glasplatte aus der Horizontalen um 90° in die Vertikale von dieser herab fällt.

Siehe hierzu auch das Kapitel "Ändern des Eckenradius von abgerundeten Rechtecken": http://help.adobe.com/de_DE/framemaker/using/WSd817046a44e105e21e63e3d11ab7f7960b-7f38.html.

Gute Eigenschaften im Sinne der vorliegenden Erfindung zeichnen sich im Falle herzustellender Erzeugnisse insbesondere durch hohe mechanische Werte bei der Biegefestigkeit und dem Biegemodul, eine möglichst hohe Wärmeformbeständigkeit (HDT A Wert) sowie in Bezug auf Flammfestigkeit durch hohe GWIT Werte aus. Hohe GWIT Werte im Sinne der vorliegenden Erfindung sind Werte gleich oder oberhalb von 750 °C. Hohe Werte in Bezug auf die Biegefestigkeit liegen bei 228 MPa oder höher. Hohe Werte in Bezug auf die Wäremformbeständigkeit liegen bei 227 °C oder höher.

Die Biegefestigkeit in der technischen Mechanik ist ein Wert für eine Biegespannung in einem auf Biegung beanspruchten Bauteil, bei dessen Überschreiten das Versagen durch Bruch des Bauteils eintritt. Sie beschreibt den Widerstand eines Werkstückes, welcher seiner Durchbiegung oder seinem Bruch entgegengesetzt wird. Im Kurzeit-Biegeversuch nach ISO 178 werden balkenförmige Probekörper vorzugsweise mit den Abmessungen 80 mm · 10 mm · 4mm an den Enden auf zwei Aufleger gelegt und in der Mitte mit einem Biegestempel belastet (Bodo Carlowitz: Tabellarische Übersicht über die Prüfung von Kunststoffen, 6. Auflage, Giesel-Verlag für Publizität, 1992, S. 16-17).

Gemäß "http://de.wikipedia.org/wiki/Biegeversuch" wird das Biegemodul im 3-Punkt-Biegeversuch ermittelt, wobei eine Prüfprobe auf zwei Auflagen positioniert und in der Mitte mit einem Prüfstempel belastet wird. Dies ist wahrscheinlich die am häufigsten verwendete Form des Biegeversuches. Der Biegemodul berechnet sich bei einer Flachprobe dann wie folgt:

$$E = l_v^3 (X_H - X_L) / 4\, D_L b a^3$$

wobei E = Biegemodul in kN/mm$^2$; $l_v$ = Stützweite in mm; $X_H$ = Ende der Biegemodulermittlung in kN; $X_L$ = Beginn der Biegemodulermittlung in kN; $D_L$ = Durchbiegung in mm zwischen $X_H$ und $X_L$; $b$ = Probenbreite in mm; $a$ = Probendicke in mm.

Die Wärmeformbeständigkeit ist ein Maß für die Temperaturbelastbarkeit von Kunststoffen. Wegen deren viskoelastischen Materialverhaltens gibt es für Kunststoffe keine streng definierte obere Einsatztemperatur, stattdessen wird eine Ersatzgröße unter definierter Last bestimmt. Eine Methode ist die Prüfung der Wärmeformbeständigkeit nach DIN EN ISO 75-1,-2,-3 (Vorläufer: DIN 53461) wonach zur Bestimmung der Wärmeformbeständigkeitstemperatur ein Standardprobekörper mit rechteckigem Querschnitt verwendet wird, der bevorzugt flachkant einer Dreipunktbiegung bei konstanter Last ausgesetzt wird. Je nach Probekörperhöhe wird dabei zur Erzielung einer sogenannten Randfaserspannung $\sigma_f$ von 1,80 N/mm$^2$ (Methode A) durch Gewichtsstücke oder/und Federn eine Kraft

$$F = 2\sigma_f b h^2 / 3\, L$$

aufgebracht, wobei b = Probenbreite, h = Probenhöhe und L = Auflagerabstand bedeuten. Siehe auch: http://de.wikipedia.org/wiki/W%C3%A4rmeformbest%C3%A4ndigkeit.

Anschließend werden die belasteten Proben einer Erwärmung mit konstanter Heizrate von 120 K/h (oder 50 K/h) ausgesetzt. Erreicht dabei die Durchbiegung der Probe eine Randfaserdehnung von 0,2 %, so ist die zugehörige Temperatur die Wärmeformbeständigkeitstemperatur HDT (engl. heat deflection temperature oder heat distortion temperature).

Der GWIT Wert wird durch Glühdrahtprüfungen an Enderzeugnissen und Werkstoffen gemäß IEC 60695-2-13 ermittelt. Die Europäische Norm EN 60335-1 "Sicherheit elektrischer Geräte für den Hausgebrauch und ähnliche Zwecke Teil 1: Allgemeine Anforderungen" enthält in Abschnitt 30 "Widerstand gegen Feuer und Wärme" spezifische Sicherheitsanforderungen, die mit Hilfe der in EN/IEC 606952-10 bis 13 beschriebenen Tests erfüllt werden müssen, wobei IEC 60695-2-13 die Prüfungen mit dem Glühdraht für die Entzündbarkeit von Werkstoffen (GWIT) betrifft. Für unbeaufsichtigte Haushaltsgeräte >0.2 A gibt es gemäß EN 60335-1, Abschnitt 30 die Anforderung IEC 60695-2-13, einer Entzündbarkeit von Werkstoffen (GWIT) 775°C < 5 s.

Der Versuchsablauf beim GWIT Test ist wie folgt: Die Proben werden in 50 °C-Schritten von 500 bis 900°C und bei 960°C für 30 s dem Glühdraht ausgesetzt. Die Probe wird als entzündet eingestuft, wenn sie mehr als 5 s brennt. Die Temperatur, bei welcher das Material in 3 Versuchen sich nicht entzündet (Beispiel: 750°C) plus 25 K, wird als GWIT (775°C) bezeichnet.

Die 5 s Entzündbarkeitsanforderung ist sehr streng und manche flammgeschützte Kunststoffe, die die Einstufung UL94 V0 erreichen, fallen durch, da sie erst kurz nach den 5 s verlöschen. Kunststoffe mit Flammschutzmitteln, die in der Gasphase wirken, sind hier besonders betroffen.

Um den GWIT Test zu verbessern, wurde 2007 ein Rundversuch unter Beteiligung von Industrie und VDE (Verband der Elektrotechnik Elektronik Informationstechnik e.V.) durchgeführt. Die Ergebnisse wurden im Rahmen eines internationalen IEC/TC 89 Rundversuchs unter anderem zur Verbesserung der GWIT Prüfverfahren mit berücksichtigt.

Die Rundversuche zeigten, dass Prüfumgebung, Prüfkammer, Glühdraht und Temperaturmessung nicht genau definiert sind und zu streuenden Ergebnissen führen können. Mit der Ausnahme von Corona-Erscheinungen, die nicht mehr als Flammen gelten, werden die gewonnenen Erkenntnisse jedoch sehr wahrscheinlich nicht zu größeren Änderungen in den Überarbeitungen der GWIT Normen führen.

**Lösung der Aufgabe** und Gegenstand der vorliegenden Erfindung sind Zusammensetzungen enthaltend

a) 15 bis 90 Gew.- %, bevorzugt 20 bis 70 Gew.-%, besonders bevorzugt 30 bis 60 Gew.-% Polyamid 66,

b) 3 bis 30 Gew.-%, bevorzugt 5 bis 25 Gew.-%, besonders bevorzugt 10 bis 20 Gew.-% Polyamid 46,

c) 5 bis 70 Gew.-%, bevorzugt 10 bis 45 Gew.-%, besonders bevorzugt 15 bis 35 Gew.-% Glasfasern, und

d) 0,01 bis 3 Gew.-%, bevorzugt 0,05 bis 1,5 Gew-%, besonders bevorzugt 0,1 bis 0,8 Gew.- % wenigstens eines Thermostabilisators,

wobei die Summe aller Gewichtsprozente der Komponenten stets 100 ergibt.

**Lösung der Aufgabe** und Gegenstand der vorliegenden Erfindung sind aber auch Zusammensetzungen enthaltend

a) 15 bis 91,99 Gew.- %, bevorzugt 20 bis 70 Gew.-%, besonders bevorzugt 30 bis 60 Gew.-% Polyamid 66,

b) 3 bis 30 Gew.-%, bevorzugt 5 bis 25 Gew.-%, besonders bevorzugt 10 bis 20 Gew.-% Polyamid 46,

c) 5 bis 70 Gew.-%, bevorzugt 10 bis 45 Gew.-%, besonders bevorzugt 15 bis 35 Gew.-% Glasfasern, und

d) 0,01 bis 3 Gew.-%, bevorzugt 0,05 bis 1,5 Gew-%, besonders bevorzugt 0,1 bis 0,8 Gew. % wenigstens eines Thermostabilisators,

wobei die Summe aller Gewichtsprozente der Komponenten 100 ergibt.

Zur Klarstellung sei angemerkt, dass vom Rahmen der vorliegenden Erfindung alle nachfolgend aufgeführten allgemeinen oder in Vorzugsbereichen genannten Definitionen und Parameter in beliebigen Kombinationen umfasst sind. Sofern nicht anders angegeben beziehen sich alle Angaben auf Raumtemperatur (RT) = 23 + / - 2 °C und auf Normaldruck 1 bar.

Ferner sei zur Klarstellung angemerkt, dass die Zusammensetzungen in bevorzugter Ausführungsform Mischungen der Komponenten a), b), c) und d) sowie aus diesen Mischungen mittels Umarbeitungsverfahren, bevorzugt mittels wenigstens eines Misch- oder Knetapparats, herzustellende thermoplastische Formmassen aber auch aus diesen wiederum, insbesondere durch Extrusion oder Spritzguss, herzustellende Erzeugnisse sein können.

Die Zubereitung der erfindungsgemäßen Zusammensetzungen für eine weitere Nutzung erfolgt durch Mischen der als Edukte einzusetzenden Komponenten a), b), c) und d) in wenigstens einem Mischwerkzeug. Hierdurch werden als Zwischenprodukte, auf den erfindungsgemäßen Zusammensetzungen basierende, Formmassen erhalten. Diese Formmassen - auch als thermoplastische Formmassen bezeichnet - können entweder ausschließlich aus den Komponenten a), b), c) und d) bestehen, oder aber zusätzlich zu den Komponenten a), b), c) und d) noch weitere Komponenten enthalten. In diesem Fall ist wenigstens eine der Komponenten a), b), c) oder d) im Rahmen der angegebenen Mengenbereiche so zu variieren, dass die Summe aller Gewichtsprozente stets 100 ergibt.

Im Falle thermoplastischer Formmassen und daraus herzustellender Erzeugnisse liegt der Anteil der erfindungsgemäßen Zusammensetzungen in diesen bevorzugt im Bereich von 50 bis 100 Gew,-%, bevorzugt im Bereich von 90 bis 100 Gew.-%, vor, wobei es sich bei den weiteren Komponenten bzw. übrigen Bestandteilen um Zusatzstoffe handelt, die der Fachmann entsprechend dem späteren Einsatz der Erzeugnisse auswählt, bevorzugt aus wenigstens einer der im Folgenden definierten Komponenten e) bis h).

Sofern nicht anders angegeben basieren alle Angaben zu Schmelzpunkten der hier genannten teilkristallinen Thermoplasten auf dem Kapillarrohr- und Polarisationsmikroskop-Verfahren gemäß ISO 3146 oder der Bestimmung über dynamische Differenzkalorimetrie (DSC), wobei eine genannten Alternativen erfüllt sein muß. Die Bestimmung des Schmelzpunktes mit DSC erfolgt in diesem Falle auf einem Mettler DSC822e Gerät. Dabei wird bei einer Aufheizrate von 20°C/min der Schmelzpunkt als Peak der ersten Aufheizung abgelesen, wobei das Gerät so programmiert ist, dass es einen Temperaturbereich von 25°C bis 360°C durchläuft. Dem Fachmann sind die genannten Verfahren bekannt; verwiesen sei hier u.a. auf http://amozeshi.aliexirs.ir/Kunststoff-Lexikon.html.

**Komponente a)**

Das als Komponente a) einzusetzende PA66 [CAS No.32131-17-2] ist ein teilkristallines Polyamid und wird aus Hexamethylendiamin (HMD) und Adipinsäure hergestellt. Es entsteht durch eine Polykondensation unter Wasserabspaltung und weist einen Schmelzpunkt bei 260 °C auf. Die Kennzeichnung der Polyamide im Rahmen der vorliegenden Erfindung entspricht internationaler Norm, wobei die erste(n) Ziffer(n) die C-Atomzahl des Ausgangsdiamins und die letzte(n) Ziffer(n) die C-Atomzahl der Dicarbonsäure angeben. Wird nur eine Zahl genannt, so bedeutet dies, dass von einer $\alpha,\omega$ -Aminocarbonsaure bzw. von dem davon abgeleiteten Lactam ausgegangen worden ist; im Übrigen sei verwiesen auf H. Domininghaus, Die Kunststoffe und ihre Eigenschaften, Seiten 272 ff. , VDI-Verlag, 1976. Gemäß DE 10 2011 084 519 A1 besitzen teilkristalline Polyamide eine Schmelzenthalpie von mehr als 25 J/g, gemessen mit der DSC-Methode gemäß ISO 11357 beim 2. Aufheizen und Integration des Schmelzpeaks. Sie unterscheiden sich dadurch von den semikristallinen Polyamiden, die eine Schmelzenthalpie im Bereich von 4 bis 25 J/g, gemessen mit der DSC-Methode gemäß ISO 11357 beim 2. Aufheizen und Integration des Schmelzpeaks und von den amorphen Polyamiden mit einer Schmelzenthalpie von weniger als 4 J/g, gemessen mit der DSC-Methode gemäß ISO 11357 beim 2. Aufheizen und Integration des Schmelzpeaks. Erfindungsgemäß als Komponente a) einzusetzendes teilkristallines PA66 ist beispielsweise unter der Bezeichnung Durethan® A30 bei der Lanxess Deutschland GmbH, Köln, Deutschland erhältlich. Zur Klarstellung sei angemerkt, dass es sich bei dem erfindungsgemäß einzusetzenden PA66 nicht um ein Copolymer mit von PA66 abweichenden Monomerkomponenten handelt.

**Komponente b)**

Als Komponente b) wird Polyamid 46 (PA46) eingesetzt, das man aus Tetramethylendiamin und Adipinsäure erhalten kann [CAS No. 50327-22-5 11]. PA46 ist u.a. bei der DSM Engineering Plastics, Sittard, Niederlande unter der Bezeichnung Stanyl® erhältlich. Zur Klarstellung sei angemerkt, dass es sich bei dem erfindungsgemäß einzusetzenden PA46 nicht um ein Copolymer mit von PA46 abweichenden Monomerkomponenten handelt.

**Komponente c)**

Die erfindungsgemäß als Komponente c) einzusetzenden Glasfasern haben bevorzugt einen Faserdurchmesser im Bereich von 7 bis 18 $\mu$m, besonders bevorzugt im Bereich von 9 bis 15 $\mu$m, und werden als Endlosfasern oder als geschnittene oder gemahlene Glasfasern zugesetzt. Die Fasern werden bevorzugt mit einem geeigneten Schlichtesystem und einem Haftvermittler bzw. Haftvermittlersystem, besonders bevorzugt auf Silanbasis, ausgerüstet.

Ganz besonders bevorzugte Haftvermittler auf Silanbasis für die Vorbehandlung sind Silanverbindungen der allgemeinen Formel (I)

$$(X-(CH_2)_q)k-Si-(O-CrH_2r+1)_4-k \qquad (I)$$

in der die Substituenten folgende Bedeutung haben:

X: $NH_2$-, HO-,

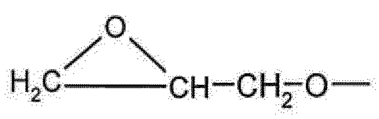

q: eine ganze Zahl von 2 bis 10, bevorzugt 3 bis 4,

r: eine ganze Zahl von 1 bis 5, bevorzugt 1 bis 2,

k: eine ganze Zahl von 1 bis 3, bevorzugt 1.

Insbesondere bevorzugte Haftvermittler sind Silanverbindungen aus der Gruppe Aminopropyltrimethoxysilan, Aminobutyltrimethoxysilan, Aminopropyltriethoxysilan, Aminobutyltriethoxysilan sowie die entsprechenden Silane, welche als Substituent X eine Glycidylgruppe enthalten.

Für die Ausrüstung der Glasfasern werden die Silanverbindungen bevorzugt in Mengen von 0,05 bis 2 Gew.-%, besonders bevorzugt 0,25 bis 1,5 Gew.-% und insbesondere 0,5 bis 1 Gew.-% bezogen auf die Glasfasern zur Oberflächenbeschichtung eingesetzt.

Die Glasfasern können bedingt durch die Verarbeitung zur Formmasse bzw. dem daraus herzustellenden Erzeugnis in der Formmasse bzw. im Erzeugnis einen kleineren d97- bzw. d50-Wert aufweisen, als die ursprünglich eingesetzten Glasfasern. Die Glasfasern können bedingt durch die Verarbeitung zur Formmasse bzw. zum Formkörper in der Formmasse bzw. im Formkörper kürzere Längenverteilungen als ursprünglich eingesetzt aufweisen.

**Komponente d)**

Als Komponente d) wird wenigstens ein Thermostabilisator eingesetzt. Bevorzugt auszuwählende Thermostabilisatoren werden ausgewählt aus der Gruppe der sterisch gehinderten Phenole, wobei es sich um Verbindungen mit phenolischer Struktur handelt, die am phenolischen Ring mindestens eine sterisch anspruchsvolle Gruppe aufweisen. Sterisch anspruchsvolle Gruppen im Sinne der vorliegenden Erfindung sind bevorzugt tert.-Butylgruppen, Isopropylgruppen und mit sterisch anspruchsvollen Gruppen substituierte Arylgruppen. Sterisch anspruchsvolle Gruppen im Sinne der vorliegenden Erfindung sind insbesondere tert.-Butylgruppen. Besonders bevorzugte Thermostabilisatoren sind sterisch gehinderte Phenole enthaltend wenigstens eine Struktur der Formel (II),

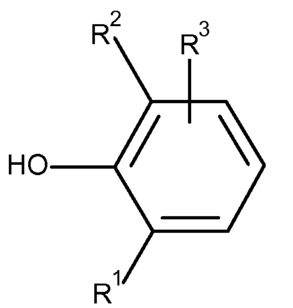

(II)

worin $R^1$ und $R^2$ für eine Alkylgruppe, für eine substituierte Alkylgruppe oder für eine substituierte Triazolgruppe stehen, wobei die Reste $R^1$ und $R^2$ gleich oder verschieden sein können und $R^3$ für eine Alkylgruppe, für eine substituierte Alkylgruppe, für eine Alkoxygruppe oder für eine substituierte Aminogruppe steht. Ganz besonders bevorzugte Thermostabilisatorn der Formel (II) werden als Antioxidantien beispielsweise in der DE-A 27 02 661 (US-A 4 360 617) beschrieben, deren Inhalt von der vorliegenden Anmeldung vollumfänglich umfasst wird. Eine weitere Gruppe bevorzugter sterisch gehinderter Phenole leiten sich von substituierten Benzolcarbonsäuren ab, insbesondere von substituierten Benzolpropionsäuren. Besonders bevorzugte Verbindungen aus dieser Klasse sind Verbindungen der Formel (III)

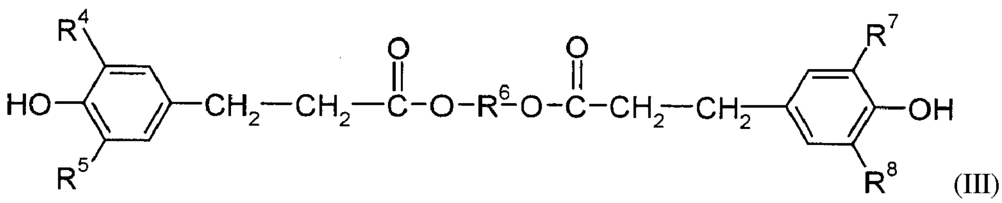

(III)

wobei $R^4$, $R^5$, $R^7$ und $R^8$ unabhängig voneinander $C_1$-$C_8$-Alkylgruppen darstellen, die ihrerseits substituiert sein können wovon mindestens eine davon eine sterisch anspruchsvolle Gruppe ist und $R^6$ einen zweiwertigen aliphatischen Rest mit 1 bis 10 C-Atomen bedeutet, der in der Hauptkette auch C-O-Bindungen aufweisen kann. Beispiele für Verbindungen der Formel (III) sind Verbindungen der Formeln (IV), (V) und (VI).

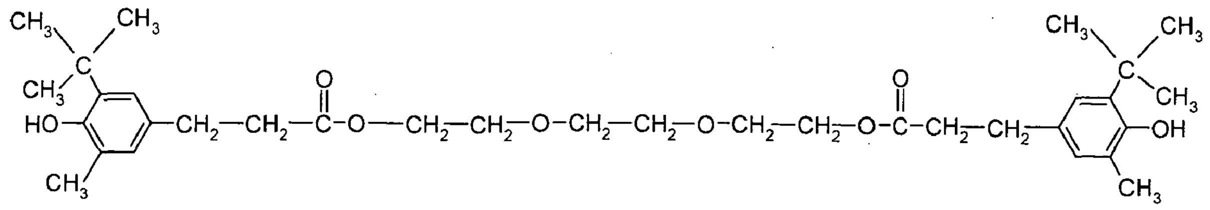

(IV) (Irganox® 245 der Firma BASF SE)

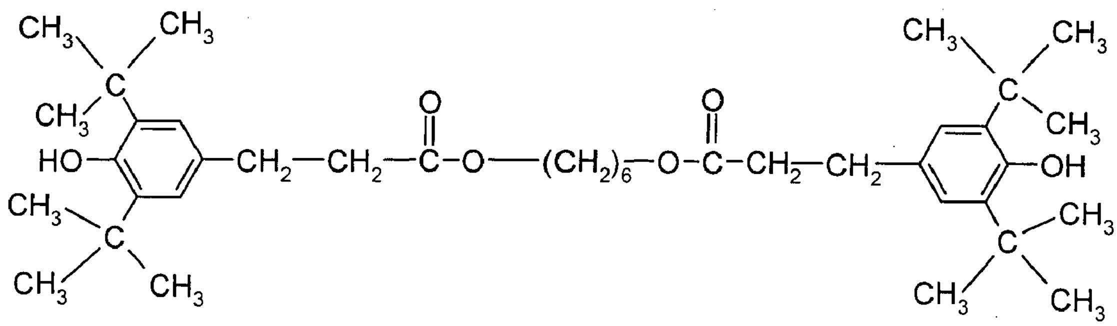

(V) (Irganox® 259 der Firma BASF SE)

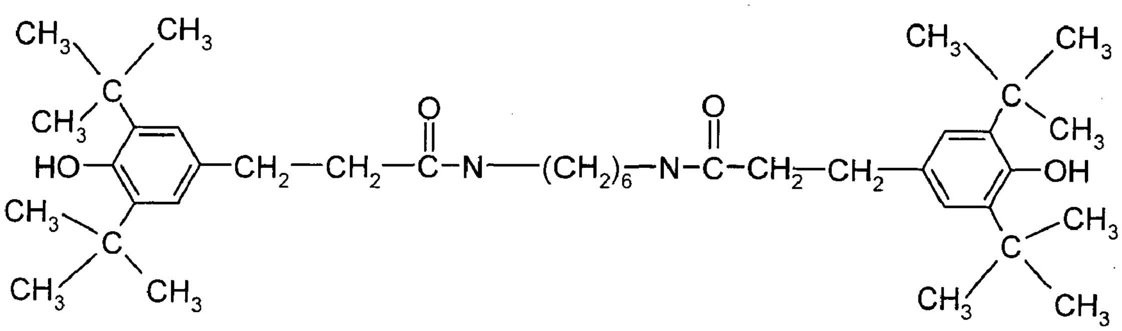

(VI) (Irganox® 1098 der Firma BASF SE)

Ganz besonders bevorzugte Thermostabilisatoren werden ausgewählt aus der Gruppe 2,2'-Methylen-bis-(4-methyl-6-tert.-butylphenol), 1,6-Hexandiol-bis[3-(3,5-di-tert.-butyl-4-hydroxyphenyl)-propionat], Pentaerythrityl-tetrakis-[3-(3,5-di-tert.-butyl-4-hydroxyphenyl)-propionat], Distearyl-3,5-di-tert.-butyl-4-hydroxybenzylphosphonat, 2,6,7-Trioxa-1-phosphabicyclo-[2.2.2]oct-4-yl-methyl-3,5-di-tert.-butyl-4-hydroxyhydrocinnamat, 3,5-Di-tert.-butyl-4-hydroxyphenyl-3,5-distearyl-thiotriazylamin, 2-(2'-Hydroxy-3'-hydroxy-3',5'-di-tert.-butylphenyl)-5-chlorbenzotriazol, 2,6-Di-tert.-butyl-4-hydroxymethylphenol, 1,3,5-Trimethyl-2,4,6-tris-(3,5-di-tert.-butyl-4-hydroxybenzyl)-benzol, 4,4'-Methylen-bis-(2,6-di-tert.-butylphenol), 3,5-Di-tert.-butyl-4-hydroxybenzyl-dimethylamin.

Insbesondere bevorzugte Thermostabilisatoren werden ausgewählt aus der Gruppe 2,2'-Methylen-bis-(4-methyl-6-tert.-butylphenol), 1,6-Hexandiol-bis-[3-(3,5-di-tert.-butyl-4-hydroxyphenyl)-propionat] (Irganox® 259), Pentaerythrityl-tetrakis-[3-(3,5-di-tert.-butyl-4-hydroxyphenyl)-propionat] sowie N,N'-Hexamethylen-bis-3,5-di-tert.-butyl-4-hydroxyhydrocinnamid (Irganox® 1098) und das vorstehend beschriebene Irganox® 245 der Firma BASF SE, Ludwigshafen, Deutschland.

Erfindungsgemäß insbesondere ganz besonders bevorzugt wird N,N'-Hexamethylen-bis-3,5-di-tert.-butyl-4-hydroxyhydrocinnamid[CAS No. 23128-74-7] als Thermostabilisator eingesetzt, das als Irganox® 1098 bei der BASF SE, Ludwigshafen, Deutschland erhältlich ist.

**Komponente e)**

In einer bevorzugten Ausführungsform betrifft die vorliegende Erfindung Zusammensetzungen enthaltend zusätzlich zu den Komponenten a), b), c), d) noch
e) 0,01 bis 5 Gew.-%, bevorzugt 0,5 bis 3 Gew.-%, besonders bevorzugt 1 bis 2 Gew.-% Dipentaerythritol [CAS-No. 126-58-9] und/oder Tripentaerythritol [CAS-No.78-24-0], wobei wenigstens eine der Komponenten a), b), c) oder d) soweit reduziert wird, dass die Summe aller Gewichtsprozente 100 ergibt.

**Komponente f)**

In einer bevorzugten Ausführungsform betrifft die vorliegende Erfindung Zusammensetzungen enthaltend zusätzlich zu den Komponenten a) bis e) oder anstelle der Komponente e) noch
f) 1 bis 55 Gew.-%, bevorzugt 2 bis 30 Gew.-%, besonders bevorzugt 5 bis 20 Gew.-% wenigstens eines Flammschutzmittels, wobei wenigstens eine der Komponenten a), b), c) oder d) sowie gegebenenfalls e) soweit reduziert wird, dass die Summe aller Gewichtsprozente stets 100 ergibt.

Bevorzugte Flammschutzmittel sind handelsübliche organische Halogenverbindungen mit Synergisten oder handelsübliche organische Stickstoffverbindungen oder organisch/anorganische Phosphorverbindungen, die einzeln oder im Gemisch miteinander eingesetzt werden. Auch mineralische Flammschutzadditive wie Magnesiumhydroxid oder Ca-Mg-Carbonat-Hydrate (z.B. DE-A 4 236 122) können eingesetzt werden. Als halogenhaltige, insbesondere bromierte und chlorierte Verbindungen seien bevorzugt Ethylen-1,2-bistetrabromphthalimid, Decabromdiphenylethan, Tetrabrombisphenol-A-epoxyoligomer, Tetrabrombisphenol-A-oligocarbonat, Tetrachlorbisphenol-A-oligocarbonat, Polypentabrombenzylacrylat, bromiertes Polystyrol oder bromierte Polyphenylenether genannt. Als Phosphorverbindungen sind die Phosphorverbindungen gemäß WO-A 98/17720 (= US 6 538 024) geeignet, bevorzugt roter Phosphor, Metallphosphinate, insbesondere Aluminiumphosphinat oder Zinkphosphinat, Metallphosphonate, insbesondere Aluminiumphosphonat, Calciumphosphonat oder Zinkphosphonat, Derivate der 9,10-Dihydro-9-oxa-10-phosphaphenanthren-10-oxide (DOPO-Derivate), Triphenylphosphat (TPP), Resorcinol-bis-(diphenylphosphat) (RDP), einschließlich Oligomere sowie Bisphenol-A-bis-diphenylphosphat (BDP) einschließlich Oligomere, ferner Zink-bis(diethylphosphinat), Aluminium-tris(diethylphosphinat), Melaminphosphat, Melaminpyrophosphat, Melaminpolyphosphat, Melamin-poly(aluminiumphosphat), Melamin-poly(zinkphosphat) oder Phenoxyphosphazenoligomere und deren Mischungen. Als Stickstoffverbindungen kommen insbesondere Melamin oder Melamincyanurat, Reaktionsprodukte aus Trichlortriazin, Piperazin und Morpholin gemäß CAS-Nr. 1078142-02-5 (z.B. MCA PPM Triazin HF der Fa. MCA Technologies GmbH, Biel-Benken, Schweiz) in Frage. Als Synergisten sind bevorzugt Antimonverbindungen, insbesondere Antimontrioxid oder Antimonpentoxid, Zinkverbindungen, Zinnverbindungen, insbesondere Zinkstannat oder Borate, insbesondere Zinkborate geeignet.

Auch können dem Flammschutzmittel sogenannte Kohlenstoffbildner und Tetrafluorethylenpolymerisate zugesetzt werden Untern den halogenhaltigen Flammschutzmitteln werden besonders bevorzugt bromierte Polystyrole wie z.B. Firemaster® PBS64 (Great Lakes, West Lafayette, USA) oder bromierte Phenylenether jeweils insbesondere bevorzugt in Kombination mit Antimontrioxid und/oder Zinkstannaten als Synergisten eingesetzt. Unter den halogenfreien Flammschutzmitteln werden besonders bevorzugt Aluminium-tris(diethylphosphinat) in Kombination mit Melaminpolyphosphat (z.B. Melapur® 200/70 der BASF SE, Ludwigshafen, Deutschland) und Zinkborat (z.B. Firebrake® 500 oder Firebrake® ZB der RioTinto Minerals, Greenwood Village, USA) oder Aluminium-tris(diethylphosphinat) in Kombination mit Aluminumphosphonat und/oder Aluminiumphosphonat-hydrat eingesetzt.

Insbesondere ganz besonders bevorzugt wird als Flammschutzmittel Aluminium-tris(diethylphosphinat) (z.B. Exolit® OP1230 der Clariant International Ltd. Muttenz, Schweiz) (CAS No. 225789-38-8) in einer Kombination mit Melaminpolyphosphat (Melapur® 200/70) [CAS No. 218768-84-4] und/oder Zinkborat (Firebrake® 500) [CAS No. 1332-07-6] eingesetzt.

**Komponente g)**

In einer bevorzugten Ausführungsform enthalten die erfindungsgemäßen Zusammensetzungen zusätzlich zu den Komponenten a) bis f) oder anstelle der Komponenten e) und/oder f) noch
g) 0,01 bis 10 Gew.-%, bevorzugt 0,1 bis 7 Gew.-%, besonders bevorzugt 0,5 bis 5 Gew.-% mindestens eines kettenverlängernd wirkenden Additives aus der Reihe der Bisphenol-Diglycidylether, der Epoxy-Kresol-Novolake oder der Epoxy-Phenol-Novolake, wobei wenigstens eine der Komponenten a), b), c), d) sowie gegebenenfalls e) und/oder f) soweit reduziert wird, dass die Summe aller Gewichtsprozente 100 ergibt.

Epoxy-Phenol-Novolake bzw. Epoxy-Kresol-Novolake können als Kondensationsprodukte von Phenol bzw. Kresol mit Formaldehyd und nachfolgender Umsetzung mit Epichlorhydrin erhalten werden. Ein Beispiel ist das Araldite® ECN 1280-1 der Fa. Huntsman, Everberg, Belgien.

Bevorzugt werden Bisphenol-Diglycidylether eingesetzt. Diese können durch Reaktionen von Bisphenol-Derivaten mit Epichlorhydrin erhalten werden. Bevorzugte Bisphenol-Komponenten sind 2,2-Bis(4-hydroxyphenyl)propan (Bisphenol A), 1,1-Bis(4-hydroxyphenyl)-1-phenyl-ethan (Bisphenol AP), Bis(4-hydroxyphenyl)sulfon (Bisphenol S) und Bis(4-hydroxydiphenyl)methan (Bisphenol F), wobei Bisphenol-A besonders bevorzugt ist.

Ganz besonders bevorzugt sind feste Bisphenol-A-Diglycidylether [CAS No.1675-54-3] mit einem Erweichungspunkt oberhalb von 60°C wie z.B. das Araldite® GT7071 der Fa. Huntsman, Everberg, Belgien.

**Komponente h)**

In einer bevorzugten Ausführungsform enthalten die erfindungsgemäßen Zusammensetzungen zusätzlich zu den Komponenten a) bis g) oder anstelle der Komponenten e) und/oder f) und/oder g) noch
h) 0,01 bis 20 Gew.-%, bevorzugt 0,01 bis 10 Gew.-%, besonders bevorzugt 0,01 bis 5 Gew.-% wenigstens eines sonstigen, von den Komponenten c) bis g) unterschiedlichen Additivs, wobei wenigstens eine der Komponenten a), b), c), d) sowie gegebenenfalls e) und/oder f) und/oder g) soweit reduziert wird, dass die Summe aller Gewichtsprozente 100 ergibt.

Übliche Additive der Komponente h) sind bevorzugt
von Komponente d) verschiedene Stabilisatoren, Entformungsmittel, UV-Stabilisatoren, Gammastrahlenstabilisatoren, Antistatika, Fließhilfsmittel, Flammschutzmittel, Elastomermodifikatoren, Brandschutzadditive, Emulgatoren, Nukleierungsmittel, Säurefänger, Weichmacher, Gleitmittel, Farbstoffe oder Pigmente. Die genannten und weitere geeignete Additive sind zum Beispiel beschrieben in Gächter, Müller, Kunststoff-Additive, 3. Ausgabe, Hanser-Verlag, München, Wien, 1989 und im Plastics Additives Handbook, 5th Edition, Hanser-Verlag, München, 2001. Die Additive können alleine oder in Mischung bzw. in Form von Masterbatchen eingesetzt werden.

Als Stabilisatoren werden bevorzugt sterisch gehinderte Phenole, Hydrochinone, aromatische sekundäre Amine wie Diphenylamine, substituierte Resorcine, Salicylate, Benzotriazole und Benzophenone, sowie verschieden substituierte Vertreter dieser Gruppen oder deren Mischungen eingesetzt.

Bevorzugte Entformungsmittel werden ausgewählt aus der Reihe Esterwachse, Pentaerytritoltetrastearat (PETS), langkettige Fettsäuren, Salze langkettiger Fettsäuren, Amidderivate langkettiger Fettsäuren oder Montanwachse, sowie niedermolekulare Polyethylen- bzw. Polypropylenwachse oder Ethylen Homopolymer Wachse.

Bevorzugte langkettige Fettsäuren sind Stearinsäure oder Behensäure. Bevorzugte Salze der langkettigen Fettsäuren sind Calciumstearat oder Zinkstearat. Bevorzugtes Amidderivat langkettiger Fettsäuren ist Ethylen-bis-stearylamid [CAS No 110-30-5]. Bevorzugtes Montanwachs sind Mischungen aus geradkettigen, gesättigten Carbonsäuren mit Kettenlängen von 28 bis 32 C-Atomen.

Als Pigmente bzw. Farbstoffe können bevorzugt Zinksulfid, Titandioxid, Ultramarinblau, Eisenoxid, Ruß, Phthalocyanine, Chinacridone, Perylene, Nigrosin und Anthrachinone eingesetzt werden. Das als Pigment bevorzugt einzusetzende Titandioxid hat bevorzugt eine mittlere Teilchengröße im Bereich von 90 nm bis 2000 nm. Für das erfindungsgemäß als Pigment bevorzugt einzusetzende Titandioxid kommen Titandioxid-Pigmente in Frage, deren Grundkörper nach dem Sulfat (SP)- oder Chlorid (CP)-Verfahren hergestellt sein können und die Anatas und / oder Rutilstruktur, bevorzugt Rutilstruktur haben. Der Grundkörper muss nicht stabilisiert sein, jedoch ist eine spezielle Stabilisierung bevorzugt: beim CP-Grundkörper durch eine Al- Dotierung von 0,3-3,0 Gew.-% (gerechnet als $Al_2O_3$) und einen Sauerstoffüberschuss in der Gasphase bei der Oxidation des Titantetrachlorids zu Titandioxid von mindestens 2 % ; beim SP-Grundkörper durch eine Dotierung z. B. mit Al, Sb, Nb oder Zn. Besonders bevorzugt, um eine hinreichend hohe Helligkeit der aus den erfindungsgemäßen Zusammensetzungen herzustellenden Erzeugnisse zu erhalten, ist eine "leichte" Stabilisierung mit Al bevorzugt, bzw. bei höheren Al-Dotierungsmengen eine Kompensation mit Antimon. Bei der Verwendung von Titandioxid als Weißpigment in Farben und Lacken, Kunststoffen usw. ist bekannt, dass durch UV-Absorption erzeugte unerwünschte photokatalytische Reaktionen zur Zersetzung des pigmentierten Materials führen. Dabei absorbieren Titandioxid-Pigmente im nahen ultravioletten Bereich Licht, so dass Elektron-Loch-Paare entstehen, welche hochreaktive Radikale auf der Titandioxid-Oberfläche erzeugen. Die gebildeten Radikale haben in organischen Medien einen Bindemittelabbau zur Folge. Erfindungsgemäß bevorzugt wird zur Erniedrigung der Photoaktivität des Titandioxids dieses anorganisch nachbehandelt, besonders bevorzugt mit Oxiden von Si und / oder Al und / oder Zr und / oder durch den Einsatz von Sn-Verbindungen.

Bevorzugt ist die Oberfläche von pigmentärem Titandioxid mit amorphen Ausfällungen von Oxidhydraten der Verbindungen $SiO_2$ und / oder $Al_2O_3$ und / oder Zirkonoxid bedeckt. Die $Al_2O_3$-Hülle erleichtert die Pigmentdispergierung in der Polymermartrix, die $SiO_2$-Hülle erschwert den Ladungsaustausch an der Pigmentoberfläche und verhindert dadurch den Polymerabbau.

Erfindungsgemäß wird das Titandioxid bevorzugt mit hydrophilen und/oder hydrophoben organischen Beschichtungen versehen, insbesondere mit Siloxanen oder Polyalkoholen.

Erfindungsgemäß als Komponente h) insbesondere bevorzugt als Pigment einzusetzendes Titandioxid [CAS No.13463-67-7] weist bevorzugt eine mittlere Teilchengröße im Bereich von 90 nm bis 2000 nm, bevorzugt im Bereich

von 200 nm bis 800 nm auf.

Kommerziell erhältliche Produkte sind beispielsweise Kronos® 2230, Kronos® 2225 und Kronos® vlp7000 der Fa. Kronos, Dallas, USA.

Als Nukleierungsmittel werden bevorzugt Talkum, Natrium- oder Calciumphenylphosphinat, Aluminiumoxid oder Siliziumdioxid eingesetzt, wobei Talkum [CAS No. 14807-96-6] besonders bevorzugt ist, insbesondere mikrokristallines Talkum. Talkum, auch als Talk bezeichnet, ist ein Schichtsilikat mit der chemischen Zusammensetzung $Mg_3[Si_4O_{10}(OH)_2]$, das je nach Modifikation als Talk-1A im triklinen oder als Talk-2M im monoklinen Kristallsystem kristallisiert (http://de.wikipedia.org/wiki/Talkum). Erfindungsgemäß einzusetzendes Talkum kann beispielsweise als Mistron® R10 von Imerys Talc Group, Toulouse, Frankreich (Rio Tinto Group) bezogen werden.

Als Säurefänger werden bevorzugt Hydrotalcit, Kreide, Böhmit oder Zinkstannate eingesetzt.

Als Weichmacher werden bevorzugt Phthalsäuredioctylester, Phthalsäuredibenzylester, Phthalsäurebutylbenzylester, Kohlenwasserstofföle oder N-(n-Butyl)benzolsulfonamid eingesetzt.

Als Elastomermodifikator einzusetzendes Additiv wird bevorzugt eines oder mehrere Pfropf-polymerisat(e) E von

E.1 5 bis 95 Gew.-%, vorzugsweise 30 bis 90 Gew.-%, wenigstens eines Vinylmonomeren auf

E.2 95 bis 5 Gew.-%, vorzugsweise 70 bis 10 Gew.-% einer oder mehrerer Pfropfgrundlagen mit Glasübergangstemperaturen < 10°C, vorzugsweise < 0°C, besonders bevorzugt < -20°C eingesetzt.

Die Pfropfgrundlage E.2 hat im Allgemeinen eine mittlere Teilchengröße ($d_{50}$-Wert) von 0,05 bis 10 $\mu$m, vorzugsweise 0,1 bis 5 $\mu$m, besonders bevorzugt 0,2 bis 1 $\mu$m.

Monomere E.1 sind vorzugsweise Gemische aus

E.1.1 50 bis 99 Gew.-% Vinylaromaten und/oder kernsubstituierten Vinylaromaten (wie beispielsweise Styrol, $\alpha$-Methylstyrol, p-Methylstyrol, p-Chlorstyrol) und/oder Methacrylsäure-($C_1$-$C_8$)-Alkylester (wie z.B. Methylmethacrylat, Ethylmethacrylat) und

E.1.2 1 bis 50 Gew.-% Vinylcyanide (ungesättigte Nitrile wie Acrylnitril und Methacrylnitril) und/oder (Meth)Acrylsäure-($C_1$-$C_8$)-Alkylester (wie z.B. Methylmethacrylat, n-Butylacrylat, t-Butylacrylat) und/oder Derivate (wie Anhydride und Imide) ungesättigter Carbonsäuren (beispielsweise Maleinsäureanhydrid und N-Phenyl-Maleinimid).

Bevorzugte Monomere E.1.1 sind ausgewählt aus mindestens einem der Monomere Styrol, $\alpha$ -Methylstyrol und Methylmethacrylat, bevorzugte Monomere E.1.2 sind ausgewählt aus mindestens einem der Monomere Acrylnitril, Maleinsäureanhydrid und Methylmethacrylat.

Besonders bevorzugte Monomere sind E.1.1 Styrol und E.1.2 Acrylnitril.

Für die in den Elastomermodifikatoren einzusetztenden Pfropfpolymerisate geeignete Pfropfgrundlagen E.2 sind beispielsweise Dienkautschuke, EP(D)M-Kautschuke, also solche auf Basis Ethylen/Propylen und gegebenenfalls Dien, Acrylat-, Polyurethan-, Silikon-, Chloropren und Ethylen/Vinylacetat-Kautschuke.

Bevorzugte Pfropfgrundlagen E.2 sind Dienkautschuke (z.B. auf Basis Butadien, Isopren etc.) oder Gemische von Dienkautschuken oder Copolymerisate von Dienkautschuken oder deren Gemischen mit weiteren copolymerisierbaren Monomeren (z.B. gemäß E.1.1 und E.1.2), mit der Maßgabe, dass die Glasübergangstemperatur der Komponente E.2 unterhalb <10°C, vorzugsweise <0°C, besonders bevorzugt <-10°C liegt.

Besonders bevorzugt ist als Pfropfgrundlage E.2. reiner Polybutadienkautschuk.

Besonders bevorzugte Polymerisate E sind ABS-Polymerisate (Emulsions-, Masse- und Suspensions-ABS), wie sie z. B. in der DE-A 2 035 390 (=US-A 3 644 574) oder in der DE-A 2 248 242 (=GB-A 1 409 275) bzw. in Ullmann, Enzyklopädie der Technischen Chemie, Bd. 19 (1980), S. 280 ff. beschrieben sind. Der Gelanteil der Pfropfgrundlage E.2 beträgt mindestens 30 Gew.-%, vorzugsweise mindestens 40 Gew.-% (in Toluol gemessen). ABS bedeutet Acrylnitril-Butadien-Styrol-Copolymerisat [CAS No. 9003-56-9] und ist ein synthetisches Terpolymer aus den drei unterschiedlichen Monomerarten Acrylnitril, 1,3-Butadien und Styrol. Es gehört zu den amorphen Thermoplasten. Die Mengenverhältnisse können dabei variieren von 15-35 % Acrylnitril, 5-30 % Butadien und 40-60 % Styrol.

Die Elastomermodifikatoren bzw. Pfropfcopolymerisate E werden durch radikalische Polymerisation, z.B. durch Emulsions-, Suspensions-, Lösungs- oder Massepolymerisation, vorzugsweise durch Emulsions- oder Massepolymerisation hergestellt.

Besonders geeignete Pfropfkautschuke sind auch ABS-Polymerisate, die durch Redox-Initiierung mit einem Initiatorsystem aus organischem Hydroperoxid und Ascorbinsäure gemäß US-A 4 937 285 hergestellt werden.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten E auch solche Produkte verstanden, die durch (Co)Polymerisation der Pfropfmonomere in Gegenwart der Pfropfgrundlage gewonnen werden und bei der Aufarbeitung

mit anfallen.

Geeignete Acrylatkautschuke basieren auf Propfgrundlagen E.2 die vorzugsweise Polymerisate aus Acrylsäurealkylestern, gegebenenfalls mit bis zu 40 Gew.-%, bezogen auf E.2 anderen polymerisierbaren, ethylenisch ungesättigten Monomeren sind. Zu den bevorzugten polymerisierbaren Acrylsäureestern gehören $C_1$-$C_8$-Alkylester, bevorzugt Methyl-, Ethyl-, Butyl-, n-Octyl- und 2-Ethylhexylester; Halogenalkylester, vorzugsweise Halogen-$C_1$-$C_8$-alkyl-ester, insbesondere bevorzugt Chlorethylacrylat sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, wie z.B. Ethylenglykoldimethacrylat, Allylmethacrylat; mehrfach ungesättigte heterocyclische Verbindungen, wie z.B. Trivinyl- und Triallylcyanurat; polyfunktionelle Vinylverbindungen, wie Di- und Trivinylbenzole; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens 3 ethylenisch ungesättigte Gruppen aufweisen.

Besonders bevorzugte vernetzende Monomere sind die cyclischen Monomere Triallylcyanurat, Triallylisocyanurat, Triacryloylhexahydro-s-triazin, Triallylbenzole. Die Menge der vernetzten Monomere beträgt vorzugsweise 0,02 bis 5, insbesondere 0,05 bis 2 Gew.-%, bezogen auf die Pfropfgrundlage E.2.

Bei cyclischen vernetzenden Monomeren mit mindestens 3 ethylenisch ungesättigten Gruppen ist es vorteilhaft, die Menge auf unter 1 Gew.-% der Pfropfgrundlage E.2 zu beschränken.

Bevorzugte "andere" polymerisierbare, ethylenisch ungesättigte Monomere, die neben den Acrylsäureestern gegebenenfalls zur Herstellung der Pfropfgrundlage E.2 dienen können, sind beispielsweise Acrylnitril, Styrol, $\alpha$-Methylstyrol, Acrylamide, Vinyl-$C_1$-$C_6$-alkylether, Methylmethacrylat, Butadien. Bevorzugte Acrylatkautschuke als Pfropfgrundlage E.2 sind Emulsionspolymerisate, die einen Gelgehalt von mindestens 60 Gew.-% aufweisen.

Weitere geeignete Pfropfgrundlagen gemäß E.2 sind Silikonkautschuke mit pfropfaktiven Stellen, wie sie in den DE-A 3 704 657 (= US 4 859 740), DE-A 3 704 655 (= US 4 861 831), DE-A 3 631 540 (= US 4 806 593) und DE-A 3 631 539 (= US 4 812 515) beschrieben werden.

Unabhängig von der Komponente c) können als Additive zusätzliche Füll- und/oder Verstärkungsstoffe in den erfindungsgemäßen Zusammensetzungen enthalten sein.

Bevorzugt wird aber auch eine Mischung aus zwei oder mehr unterschiedlichen Füllstoffen und/oder Verstärkungsstoffen, insbesondere auf Basis von Talk, Glimmer, Silikat, Quarz, , Wollastonit, Kaolin, amorphe Kieselsäuren, Magnesiumcarbonat, Kreide, Feldspat, Bariumsulfat, Glaskugeln und/oder faserförmige Füllstoffe und/oder Verstärkungsstoffen auf der Basis von Kohlenstofffasern eingesetzt. Bevorzugt werden mineralische teilchenförmige Füllstoffe auf der Basis von Glimmer, Silikat, Quarz, Wollastonit, Kaolin, amorphe Kieselsäuren, Magnesiumcarbonat, Kreide, Feldspat oder Bariumsulfat eingesetzt. Besonders bevorzugt werden erfindungsgemäß mineralische teilchenförmige Füllstoffe auf der Basis von Wollastonit oder Kaolin eingesetzt.

Besonders bevorzugt werden ferner auch nadelförmige mineralische Füllstoffe als Additiv eingesetzt. Unter nadelförmigen mineralischen Füllstoffen wird erfindungsgemäß ein mineralischer Füllstoff mit stark ausgeprägtem nadelförmigen Charakter verstanden. Als Beispiel seien nadelförmige Wollastonite genannt. Bevorzugt weist das Mineral ein Länge : Durchmesser - Verhältnis von 2:1 bis 35:1, besonders bevorzugt von 3:1 bis 19:1, am meisten bevorzugt von 4:1 bis 12:1 auf. Die mittlere Teilchengröße der erfindungsgemäßen nadelförmigen Mineralien liegt bevorzugt bei kleiner 20 $\mu$m, besonders bevorzugt bei kleiner 15 $\mu$m, insbesondere bevorzugt bei kleiner 10 $\mu$m bestimmt mit einem CILAS GRANULOMETER.

Wie bereits oben bei der Komponente c) beschrieben, kann in einer bevorzugten Einsatzform der Füllstoff und/oder Verstärkungsstoff oberflächenmodifiziert sein, besonders bevorzugt mit einem Haftvermittler bzw. Haftvermittlersystem, insbesondere bevorzugt auf Silanbasis. Die Vorbehandlung ist jedoch nicht unbedingt erforderlich.

Für die Ausrüstung der als Additiv einzusetzenden Füllstoffe werden die Silanverbindungen im Allgemeinen in Mengen von 0,05 bis 2 Gew.-%, vorzugsweise 0,25 bis 1,5 Gew.-% und insbesondere 0,5 bis 1 Gew.-% bezogen auf den mineralischen Füllstoff zur Oberflächenbeschichtung eingesetzt.

Auch die als Komponente h) zusätzlich einzusetzenden teilchenförmigen Füllstoffe können bedingt durch die Verarbeitung zur Formmasse bzw. Formkörper in der Formmasse bzw. im Formkörper einen kleineren d97- bzw. d50-Wert aufweisen, als wie sie ursprünglich eingesetzt wurden.

**Bevorzugte Ausführungsformen**

In einer bevorzugten Ausführungsform betrifft die vorliegende Erfindung Zusammensetzungen enthaltend PA66 und PA46 sowie Glasfasern und wenigstens einen Thermostabilisator ausgewählt aus der Gruppe der sterisch gehinderten Phenole der Formel (II),

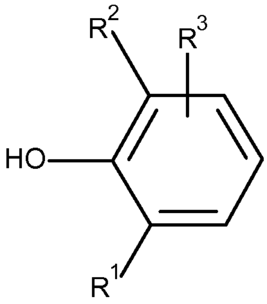

(II)

worin $R^1$ und $R^2$ für eine Alkylgruppe, für eine substituierte Alkylgruppe oder für eine substituierte Triazolgruppe stehen, wobei die Reste $R^1$ und $R^2$ gleich oder verschieden sein können und $R^3$ für eine Alkylgruppe, für eine substituierte Alkylgruppe, für eine Alkoxygruppe oder für eine substituierte Aminogruppe steht, bevorzugt wenigstens einen Thermostabilisator ausgewählt aus der Gruppe 2,2'-Methylen-bis-(4-methyl-6-tert.-butylphenol), 1,6-Hexandiol-bis[3-(3,5-di-tert.-butyl-4-hydroxyphenyl)-propionat], Pentaerythrityl-tetrakis-[3-(3,5-di-tert.-butyl-4-hydroxyphenyl)-propionat], Distearyl-3,5-di-tert.-butyl-4-hydroxybenzylphosphonat, 2,6,7-Trioxa-1-phosphabicyclo-[2.2.2]oct-4-yl-methyl-3,5-di-tert.-butyl-4-hydroxyhydrocinnamat, 3,5-Di-tert.-butyl-4-hydroxyphenyl-3,5-distearyl-thiotriazylamin, 2-(2'-Hydroxy-3'-hydroxy-3',5'-di-tert.-butylphenyl)-5-chlorbenzotriazol, 2,6-Di-tert.-butyl-4-hydroxymethylphenol, 1,3,5-Trimethyl-2,4,6-tris-(3,5-di-tert.-butyl-4-hydroxybenzyl)-benzol, 4,4'-Methylen-bis-(2,6-di-tert.-butylphenol), 3,5-Di-tert.-butyl-4-hydroxybenzyldimethylamin, besonders bevorzugt wenigstens einen Thermostabilisator ausgewählt aus der Gruppe 2,2'-Methylen-bis-(4-methyl-6-tert.-butylphenol), 1,6-Hexandiol-bis-[3-(3,5-di-tert.-butyl-4-hydroxyphenyl)-propionat] (Irganox® 259), Pentaerythrityl-tetrakis-[3-(3,5-di-tert.-butyl-4-hydroxyphenyl)-propionat] und N,N'-Hexamethylen-bis-3,5-di-tert.-butyl-4-hydroxyhydrocinnamid (Irganox® 1098), insbesondere N,N'-Hexamethylen-bis-3,5-di-tert.-butyl-4-hydroxyhydrocinnamid.

In einer bevorzugten Ausführungsform betrifft die vorliegende Erfindung Zusammensetzungen enthaltend PA66 und PA6T/6 sowie Glasfasern und wenigstens einen Thermostabilisator ausgewählt aus der Gruppe der sterisch gehinderten Phenole der Formel (II),

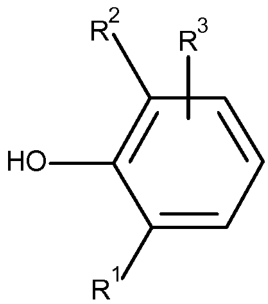

(II)

worin $R^1$ und $R^2$ für eine Alkylgruppe, für eine substituierte Alkylgruppe oder für eine substituierte Triazolgruppe stehen, wobei die Reste $R^1$ und $R^2$ gleich oder verschieden sein können und $R^3$ für eine Alkylgruppe, für eine substituierte Alkylgruppe, für eine Alkoxygruppe oder für eine substituierte Aminogruppe steht, bevorzugt wenigstens einen Thermostabilisator ausgewählt aus der Gruppe 2,2'-Methylen-bis-(4-methyl-6-tert.-butylphenol), 1,6-Hexandiol-bis[3-(3,5-di-tert.-butyl-4-hydroxyphenyl)-propionat], Pentaerythril-tetrakis-[3-(3,5-di-tert.-butyl-4-hydroxyphenyl)-propionat], Distearyl-3,5-di-tert.-butyl-4-hydroxybenzylphosphonat, 2,6,7-Trioxa-1-phosphabicyclo-[2.2.2]oct-4-yl-methyl-3,5-di-tert.-butyl-4-hydroxyhydrocinnamat, 3,5-Di-tert.-butyl-4-hydroxyphenyl-3,5-distearyl-thiotriazylamin, 2-(2'-Hydroxy-3'-hydroxy-3',5'-di-tert.-butylphenyl)-5-chlor-benzotriazol, 2,6-Di-tert.-butyl-4-hydroxymethylphenol, 1,3,5-Trimethyl-2,4,6-tris-(3,5-di-tert.-butyl-4-hydroxybenzyl)-benzol, 4,4'-Methylen-bis-(2,6-di-tert.-butylphenol), 3,5-Di-tert.-butyl-4-hydroxybenzyldimethylamin, besonders bevorzugt wenigstens einen Thermostabilisator ausgewählt aus der Gruppe 2,2'-Methylen-bis-(4-methyl-6-tert.-butylphenol), 1,6-Hexandiol-bis-[3-(3,5-di-tert.-butyl-4-hydroxyphenyl)-propionat] (Irganox® 259), Pentaerythrityl-tetrakis-[3-(3,5-di-tert.-butyl-4-hydroxyphenyl)-propionat] und N,N'-Hexamethylen-bis-3,5-di-tert.-butyl-4-hydroxyhydro-cinnamid (Irganox® 1098), insbesondere N,N'-Hexamethylen-bis-3,5-di-tert.-butyl-4-hydroxyhy-drocinnamid.

**Verwendungen**

Die vorliegende Erfindung betrifft aber auch die Verwendung der erfindungsgemäßen Zusammensetzungen in Form von Formmassen zur Herstellung kurzzeitwärmeformbeständiger Erzeugnisse, bevorzugt elektrischer und elektronischer Baugruppen und Komponenten, insbesondere bevorzugt optoelektronischer Erzeugnisse.

**Verfahren**

Zur Herstellung erfindungsgemäß für den Spritzguss oder für die Extrusion einzusetzende Formmassen erhält man indem man die einzelnen Komponenten der erfindungsgemäßen Zusammensetzungen vermischt, zu einem Strang austrägt, bis zur Granulierfähigkeit abkühlt und granuliert. Bevorzugt erfolgt das Vermischen bei Temperaturen im Bereich von 260 bis 295°C in der Schmelze. Insbesondere bevorzugt wird hierzu ein Zweiwellenextruder eingesetzt.

In einer bevorzugten Ausführungsform wird das Granulat, das die erfindungsgemäße Zusammensetzung enthält, bei 80 °C im Trockenlufttrockner oder Vakuumtrockenschrand für ca. 2-6 h getrocknet, bevor es dem Spritzguss oder einem Extrusionsverfahren zwecks Herstellung von Erzeugnissen unterzogen wird.

Die vorliegende Erfindung betrifft aber auch ein Verfahren zur Herstellung von Erzeugnissen, bevorzugt kurzzeitwärmeformbeständiger Erzeugnisse, für die Elektro- oder Elektronikindustrie, besonders bevorzugt elektronischer oder elektrischer Baugruppen und Komponenten, wobei das Matrixmaterial als Formmasse enthaltend die erfindungsgemäßen Zusammensetzungen durch Spritzguss oder Extrusion, bevorzugt durch Spritzguss erhalten wird.

Die vorliegende Erfindung betrifft aber auch ein Verfahren zur Verbesserung der Kurzzeitwärmeformbeständigkeit Polyamid-basierter Erzeugnisse, dadurch gekennzeichnet, dass man erfindungsgemäße Zusammensetzungen in Form von Formmassen durch Spritzguss oder Extrusion verarbeitet.

Die Verfahren des Spritzgusses sowie der Extrusion thermoplastischer Formmassen ist dem Fachmann bekannt.

Erfindungsgemäße Verfahren zur Herstellung von Erzeugnissen durch Extrusion oder Spritzguss arbeiten bei Schmelzetemperaturen im Bereich von 260 bis 330°C, bevorzugt im Bereich von 265 bis 300°C, besonders bevorzugt im Bereich von 275 bis 295°C sowie gegebenenfalls zusätzlich bei Drücken von maximal 2500 bar, bevorzugt bei Drücken von maximal 2000 bar, besonders bevorzugt bei Drücken von maximal 1500 bar und ganz besonders bevorzugt bei Drücken von maximal 750 bar.

Bei der sequentiellen Coextrusion werden zwei unterschiedliche Materialien in alternierender Folge hintereinander ausgestoßen. Auf diese Weise entsteht ein Vorformling mit in Extrusionsrichtung abschnittsweise unterschiedlicher Materialzusammensetzung. Es können bestimmte Artikelabschnitte durch entsprechende Materialauswahl mit spezifisch erforderlichen Eigenschaften ausgestattet werden, beispielsweise für Artikel mit weichen Enden und hartem Mittelteil oder integrierten weichen Faltenbalg-Bereichen (Thielen, Hartwig, Gust, "Blasformen von Kunststoffhohlkörpern", Carl Hanser Verlag, München 2006, Seite 127-129).

Das Verfahren des Spritzgusses zeichnet sich dadurch aus, dass der Rohstoff, bevorzugt in Granulatform, in einem beheizten zylindrischen Hohlraum aufgeschmolzen (plastifiziert) und als Spritzmasse unter Druck in einen temperierten Hohlraum gespritzt wird. Nach dem Abkühlen (Erstarren) der Masse wird das Spritzgussteil entformt.

Man unterscheidet

1. Plastifizieren / Aufschmelzen

2. Einspritzphase (Füllvorgang)

3. Nachdruckphase (wegen thermischer Kontraktion bei der Kristallisation)

4. Entformen.

Eine Spritzgießmaschine besteht aus einer Schließeinheit, der Spritzeinheit, dem Antrieb und der Steuerung. Zur Schließeinheit gehören feste und bewegliche Aufspannplatten für das Werkzeug, eine Stirnplatte sowie Säulen und Antrieb der beweglichen Werkzeugaufspannplatte. (Kniehebelgelenk oder hydraulische Schließeinheit).

Eine Spritzeinheit umfasst den elektrisch beheizbaren Zylinder, den Antrieb der Schnecke (Motor, Getriebe) und die Hydraulik zum Verschieben der Schnecke und Spritzeinheit. Die Aufgabe der Spritzeinheit besteht darin, das Pulver bzw. das Granulat aufzuschmelzen, zu dosieren, einzuspritzen und nachzudrücken (wegen Kontraktion). Das Problem des Rückflusses der Schmelze innerhalb der Schnecke (Leckströmung) wird durch Rückstromsperren gelöst.

Im Spritzgießwerkzeug wird dann die einströmende Schmelze gelöst, gekühlt und somit das zu fertigende Erzeugnis gefertigt. Notwendig dazu sind immer zwei Werkzeughälften. Beim Spritzguss unterscheidet man folgende Funktionskomplexe:

- Angusssystem
- Formbildende Einsätze
- Entlüftung
- Maschinen- und Kraftaufnahme
- Entformungssystem und Bewegungsübertragung
- Temperierung

Im Gegensatz zum Spritzguss wird bei der Extrusion ein endlos geformter Kunststoffstrang, hier ein Polyamid, im Extruder eingesetzt, wobei der Extruder eine Maschine zur Herstellung thermoplastischer Formstücke ist. Man unterscheidet Einschneckenextruder und Doppelschneckenextruder sowie die jeweiligen Untergruppen konventioneller Einschneckenextruder, förderwirksamer Einschneckenextruder, gegenläufiger Doppelschneckenextruder und gleichläufiger Doppelschneckenextruder.

Extrusionsanlagen bestehen aus Extruder, Werkzeug, Nachfolgeeinrichtung, Extrusionsblasformen. Extrusionsanlagen zum Herstellen von Profilen bestehen aus: Extruder, Profil-Werkzeug, Kalibrierung, Kühlstrecke, Raupen- und Rollenabzug, Trennvorrichtung und Kipprinne.

Die vorliegende Erfindung betrifft folglich auch Erzeugnisse, insbesondere Kurzzeitformbeständige Erzeugnisse, erhältlich durch Extrusion, bevorzugt Profil-Extrusion, oder Spritzguss der aus den erfindungsgemäßen Zusammensetzungen erhältlichen Formmassen.

Die vorliegende Erfindung betrifft aber auch ein Verfahren zur Herstellung kurzzeitwärmeformbeständiger Erzeugnisse, dadurch gekennzeichnet, dass PA66 in Kombination mit wenigstens einem thermoplastischen Polyamid aus der Gruppe Polyamid 46 oder der teilaromatischen Copolyamide mit Terephthalsäure und einem Schmelzpunkt im Bereich von 270° C bis 330° C enthaltende Zusammensetzungen zu Formmassen verarbeitet werden und schließlich einem Spritzguss oder einer Extrusion unterzogen werden.

Die vorliegende Erfindung betrifft aber auch ein Verfahren zur Herstellung kurzzeitwärmeformbeständiger Erzeugnisse, dadurch gekennzeichnet, dass PA66 in Kombination mit Polyamid 46 enthaltende Zusammensetzungen als Formmassen im Spritzguss oder mittels Extrusion verarbeitet werden.

Die vorliegende Erfindung betrifft bevorzugt ein Verfahren zur Herstellung kurzzeitwärmeformbeständiger Erzeugnisse, dadurch gekennzeichnet, dass Zusammensetzungen enthaltend

a) 15 bis 90 Gew.- % bevorzugt 20 bis 70 Gew.-%, besonders bevorzugt 30 bis 60 Gew.-% Polyamid 66,

b) 3 bis 30 Gew.-%, bevorzugt 5 bis 25 Gew.-%, besonders bevorzugt 10 bis 20 Gew.-% Polyamid 46,

c) 5 bis 70 Gew.-%, bevorzugt 10 bis 45 Gew.-%, besonders bevorzugt 15 bis 35 Gew.-% Glasfasern, und

d) 0,01 bis 3 Gew.-%, bevorzugt 0,05 bis 1,5 Gew-%, besonders bevorzugt 0,1 bis 0,8 Gew.-% wenigstens eines Thermostabilisators,

wobei die Summe aller Gewichtsprozente stets 100 ergibt zu Formmassen verarbeitet werden und diese einem Spritzguss oder einer Extrusion unterzogen werden.

Die vorliegende Erfindung betrifft bevorzugt ein Verfahren zur Herstellung kurzzeitwärme¬formbeständiger Erzeugnisse, dadurch gekennzeichnet, dass Zusammensetzungen enthaltend

a) 15 bis 91,99 Gew.- % bevorzugt 20 bis 70 Gew.-%, besonders bevorzugt 30 bis 60 Gew.-% Polyamid 66,

b) 3 bis 30 Gew.-%, bevorzugt 5 bis 25 Gew.-%, besonders bevorzugt 10 bis 20 Gew.-% Polyamid 46,

c) 5 bis 70 Gew.-%, bevorzugt 10 bis 45 Gew.-%, besonders bevorzugt 15 bis 35 Gew.-% Glasfasern, und

d) 0,01 bis 3 Gew.-%, bevorzugt 0,05 bis 1,5 Gew-%, besonders bevorzugt 0,1 bis 0,8 Gew. % wenigstens eines Thermostabilisators,

wobei die Summe aller Gewichtsprozente stets 100 ergibt zu Formmassen verarbeitet werden und diese einem Spritzguss oder einer Extrusion unterzogen werden.

Die durch die genannten Verfahren erhältlichen Erzeugnisse zeigen überraschenderweise eine hervorragende Kurzzeitwärmebeständigkeit, insbesondere in Lötprozessen, sowie optimierte Eigenschaften in den mechanischen Eigenschaften. Die aus den erfindungsgemäßen Zusammensetzungen herzustellenden Formmassen für den Spritzguss und die Extrusion zeichnen sich darüber hinaus durch eine gegenüber dem Stand der Technik gute Verarbeitbarkeit aus.

Die vorliegende Erfindung betrifft aber auch die Verwendung der erfindungsgemäßen Zusammensetzungen zur Steigerung der Kurzzeitwärmeformbeständigkeit von Erzeugnissen, bevorzugt von Erzeugnissen der Elektro- oder Elektronikindustrie, insbesondere von optoelektronischen Erzeugnissen.

Die auf erfindungsgemäße Weise hergestellten Erzeugnisse eignen sich deshalb hervorragend für elektrische oder elektronische Erzeugnisse, insbesondere elektronische Bauteile, die auf Leiterplatten aufgebracht werden, wie z.B. Gehäuse für Spulenkörper, Transistoren, Schalter und Steckverbinder, aber auch für optoelektronische Erzeugnisse, insbesondere LEDs oder OLEDs. Eine Leuchtdiode (auch Lumineszenz-Diode, englisch light-emitting diode, deutsch lichtemittierende Diode, LED) ist ein elektronisches Halbleiter-Bauelement. Fließt durch die Diode Strom in Durchlassrichtung, so strahlt sie Licht, Infrarotstrahlung (als Infrarotleuchtdiode) oder auch Ultraviolettstrahlung mit einer vom Halbleitermaterial und der Dotierung abhängigen Wellenlänge ab. Eine organische Leuchtdiode (englisch organic light emitting diode, OLED) ist ein dünnfilmiges leuchtendes Bauelement aus organischen halbleitenden Materialien, das sich von den anorganischen Leuchtdioden (LED) dadurch unterscheidet, dass Stromdichte und Leuchtdichte geringer sind und keine einkristallinen Materialien erforderlich sind. Im Vergleich zu herkömmlichen (anorganischen) Leuchtdioden lassen sich organische Leuchtdioden daher kostengünstiger herstellen, ihre Lebensdauer ist jedoch derzeit geringer als die herkömmlicher Leuchtdioden.

## Beispiele

Zur Herstellung der erfindungsgemäß beschriebenen Zusammensetzungen wurden die einzelnen Komponenten in einem Zweiwellenextruder (ZSK 26 Mega Compounder der Fa. Coperion Werner & Pfleiderer (Stuttgart, Deutschland) bei Temperaturen zwischen 275 und 295°C in der Schmelze vermischt, als Strang ausgetragen, bis zur Granulierfähigkeit abgekühlt und granuliert. Vor weiteren Schritten wurde das Granulat bei 80°C im Vakuumtrockenschrank für ca. 2-6 h getrocknet.

Die Platten und Prüfkörper für die in der Tabelle 1 aufgeführten Untersuchungen wurden auf einer handelsüblichen Spritzgießmaschine bei einer Massetemperatur von 280 - 290°C und einer Werkzeugtemperatur von 80-120°C verspritzt.

### Biegefestigkeit, Biegemodul und Glühdrahtentzündungstemperatur

Die Prüfung der Biegefestigkeit (Einheit MPa) und des Biegemoduls (Einheit MPa) erfolgte in Analogie zu ISO178. Die Bestimmung der Glühdrahtentzündlichkeitstemperatur (GWIT) erfolgte in Analogie zu IEC60695-2-13, Angaben in Grad Celsius.

### Wärmeformbeständigkeit

Die Prüfung der Wärmeformbeständigkeit (HDT) (Einheit °C) erfolgte in Analogie zu ISO75 mit einer Biegespannung von 1,8 $N/mm^2$ (Verfahren A)

### Kurzzeitwärmeformbeständigkeit

Der Test zur Bestimmung der Kurzzeitwärmeformbeständigkeit bzw. Lötbadbeständigkeit simuliert die Bedingungen des Wellenlötens wie folgt:
Aus einer Platte, hergestellt aus Formmassen auf Basis einer erfindungsgemäßen Zusammensetzung, wurden Prüfkörper der Abmaße 20 • 13 • 1,5 mm (Länge • Breite • Höhe) ausgeschnitten. Diese wurden auf einer Glasplatte für 15 min in einen mit der in **Tabelle 1** angegebenen Temperatur beheizten handelsüblichen Heißluftofen verbracht. Nach Abkühlen auf Raumtemperatur wurde der Formerhalt der Probekörper im Sinne eines Erhalts der ursprünglichen Größenverhältnisse und das Ausmaß des Anhaftens an der Glasplatte bewertet.

Die Resultate und Testergebnisse sind in **Tabelle 1** wiedergegeben. Darin bedeuten:

"+" eine Probe ohne Formveränderung, d.h. insbesondere ohne Abrundung der Prüfkörperkanten und Prüfkörperecken und ein Lösen des Probekörpers von der Glasplatte beim Neigen der Glasplatte aus der Horizontalen um 90° in die Vertikale, also kein Anhaften des Probekörpers.

"○" eine Probe mit leichter Formveränderung, was sich in leicht abgerundeten Kanten und Ecken, d.h. mit Kantenradien von maximal 0,8mm zeigt, wobei aber noch kein Anhaften des Probekörpers beim Neigen der Glasplatte aus der Horizontalen um 90° in die Vertikale feststellbar ist.

"-"eine stark deformierte Oberflächengeomtrie des Probekörpers, insbesondere eine vollständige Abrundung der Probekörperkanten und Probekörperecken, d.h. mit Kantenradien größer 0,8mm, und/oder eine Anhaftung des Probekörpers an der Glasplatte nach Neigung der Glasplatte aus der Horizontalen um 90° in die Vertikale.

**Einsatzstoffe**

**Komponente a):** PA66 (Durethan® A30 000000, Lanxess Deutschland GmbH, Köln, Deutschland)

**Komponente b):** PA46 (Stanyl® TE300 der DSM Engineering Plastics, Sittard, Niederlande)

**Komponente c):** Mit silanhaltigen Verbindungen beschlichtete Glasfaser mit einem Durchmesser von 10 μm (CS 7967, Handelsprodukt der Lanxess N.V., Antwerpen, Belgien)

**Komponente d):** Irganox® 1098 der BASF SE, Ludwigshafen, Deutschland

**Komponente f):** Flammschutzmittelkombination bestehend aus 75% Exolit® OP1230 der Clariant International Ltd., Muttenz, Schweiz, 20% Melapur® 200/70 der BASF SE Ludwigshafen, Deutschland und 5% Firebrake 500 (Fa. RioTinto Minerals, Greenwood Village, USA)

**Komponente h):** weitere für die Verwendung in Polyamiden gebräuchliche Additive, insbesondere Titandioxid, aber auch Entformungsmittel, insbesondere Ethylenbisamidtetrastearat, Nukleierungsmittel, insbesondere auf Basis von Talkum. Art und Menge der als Komponente h) zusammengefassten Additive stimmten in Art und Menge für Beispiele und Vergleichsbeispiele überein.

**Tabelle 1** zeigt, dass bei thermisch empfindlichen Flammschutzmittelsystemen wie Komponente f) nur im Falle der erfindungsgemäßen Polyamidblends sowohl eine gute Verarbeitbarkeit als auch eine erhöhte Kurzzeitwärmeformbeständigkeit bei Temperaturen oberhalb des Schmelzpunktes von Komponente a) gegeben ist. Dies ist eine wichtige Voraussetzung für Anwendungen, die wie z.B. Elektronikbauteile, kurzzeitig Lötbadtemperaturen bis 285 °C ausgesetzt sein können. Festzustellen ist auch die erhöhte Glühdrahtentzündlichkeit und eine vorteilhaftere Mechanik bei Verwendung der erfindungsgemäßen Zusammensetzungen in daraus herzustellenden Erzeugnissen.

**Tabelle 1:** Polyamidblends mit thermisch empfindlichen Flammschutzmitteln

| | Vgl. 1 | Vgl. 2 | Bsp. 1 | Bsp. 2 |
|---|---|---|---|---|
| Komponente a) | 50,7 | 10,7 | 40,7 | 35,7 |
| Komponente b) | | 40 | 10 | 15 |
| Komponente c) | 30 | 30 | 30 | 30 |
| Komponente d) | 0,5 | 0,5 | 0,5 | 0,5 |
| Komponente f) | 18,5 | 18,5 | 18,5 | 18,5 |
| Komponente h) | 0,3 | 0,3 | 0,3 | 0,3 |
| GWIT bei 1,5mm [°C] | 725 | * | 750 | 775 |
| Biegemodul [MPa] | 10353 | * | 10535 | 10641 |
| Biegefestigkeit [MPa] | 225 | * | 229 | 233 |
| HDT A [°C] | 242 | * | 244 | 245 |
| Kurzzeitwärmeformbeständigkeit 265°C | + | * | + | + |
| Kurzzeitwärmeformbeständigkeit 275° C | ○ | * | + | + |
| Kurzzeitwärmeformbeständigkeit 285° C | - | * | ○ | ○ |
| Kurzzeitwärmeformbeständigkeit 295° C | - | * | ○ | ○ |

(fortgesetzt)

| | Vgl. 1 | Vgl. 2 | Bsp. 1 | Bsp. 2 |
|---|---|---|---|---|
| Verarbeitbarkeit bei 290° C | + | - | + | + |
| * Wegen schwieriger Verarbeitbarkeit keine Prüfkörper herstellbar; die Mengenangeben zu den einzelnen Komponenten sind in Gew.-%. | | | | |

## Patentansprüche

**1.** Zusammensetzungen enthaltend

a) 15 bis 90 Gew.- % Polyamid 66,
b) 3 bis 30 Gew.-% Polyamid 46,
c) 5 bis 70 Gew.-% Glasfasern, und
d) 0,01 bis 3 Gew.-% wenigstens eines Thermostabilisators,

wobei die Summe aller Gewichtsprozente der Komponenten stets 100 ergibt.

**2.** Zusammensetzungen gemäß Anspruch 1, **dadurch gekennzeichnet, dass** diese 20 bis 70 Gew.-% von a), 5 bis 25 Gew.-% von b), 10 bis 45 Gew.-% von c) und 0,05 bis 1,5 Gew.-% von d) enthalten, wobei die Summe aller Gewichtsprozente der Komponenten stets 100 ergibt.

**3.** Zusammensetzungen gemäß Anspruch 1 oder 2, **dadurch gekennzeichnet, dass** diese zusätzlich zu den Komponenten a), b), c) und d) noch e) 0,01 bis 5 Gew.-% Dipentaerythritol und/oder Tripentaerythritol enthalten, wobei die übrigen Komponenten soweit reduziert werden, dass die Summe aller Gewichtsprozente stets 100 ergibt,

**4.** Zusammensetzungen gemäß einem der Ansprüche 1 bis 3, **dadurch gekennzeichnet, dass** diese zusätzlich zu den Komponenten a), b), c), d) und e) oder anstelle von e) noch f) 1 bis 55 Gew.-% wenigstens eines Flammschutzmittels enthalten, wobei die übrigen Komponenten soweit reduziert werden, dass die Summe aller Gewichtsprozente stets 100 ergibt.

**5.** Zusammensetzungen gemäß einem der Ansprüche 1 bis 4, **dadurch gekennzeichnet, dass** diese zusätzlich zu den Komponenten a) bis f) oder anstelle der Komponenten e) und/oder f) noch g) 0,01 bis 10 Gew.-% wenigstens eines Additivs mit zwei Epoxygruppen pro Molekül enthalten, wobei die übrigen Komponenten soweit reduziert werden, dass die Summe aller Gewichtsprozente stets 100 ergibt.

**6.** Zusammensetzungen gemäß einem der Ansprüche 1 bis 5, **dadurch gekennzeichnet, dass** diese zusätzlich zu den Komponenten a) bis g) oder anstelle der Komponenten e) und/oder f) und/oder g) noch h) 0,01 bis 20 Gew.-% wenigstens eines von den Komponenten c) bis g) unterschiedlichen Additivs enthalten, wobei die übrigen Komponenten soweit reduziert werden, dass die Summe aller Gewichtsprozente stets 100 ergibt.

**7.** Zusammensetzungen gemäß einem der Ansprüche 1 bis 5, **dadurch gekennzeichnet, dass** diese Thermostabilisatoren ausgewählt aus der Gruppe der sterisch gehinderten Phenole enthalten, wobei es sich um Verbindungen mit phenolischer Struktur handelt, die am phenolischen Ring mindestens eine sterisch anspruchsvolle Gruppe aufweisen, wobei sterisch anspruchsvolle Gruppen tert.-Butylgruppen, Isopropylgruppen und mit sterisch anspruchsvollen Gruppen substituierte Arylgruppen sind, bevorzugt Thermostabilisatoren enthaltend wenigstens eine Struktur der Formel (II),

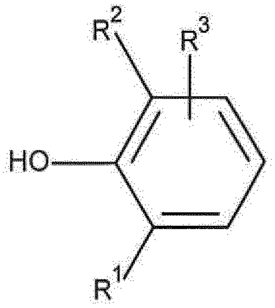

(II)

worin $R^1$ und $R^2$ für eine Alkylgruppe, für eine substituierte Alkylgruppe oder für eine substituierte Triazolgruppe stehen, wobei die Reste $R^1$ und $R^2$ gleich oder verschieden sein können und $R^3$ für eine Alkylgruppe, für eine substituierte Alkylgruppe, für eine Alkoxygruppe oder für eine substituierte Aminogruppe steht.

**8.** Zusammensetzungen gemäß Anspruch 7, **dadurch gekennzeichnet, dass** als Thermostabilisatoren sterisch gehinderte Phenole abgeleitet von substituierten Benzolcarbonsäuren, bevorzugt von substituierten Benzolpropionsäuren, besonders bevorzugt von Verbindungen der Formel (III) eingesetzt werden

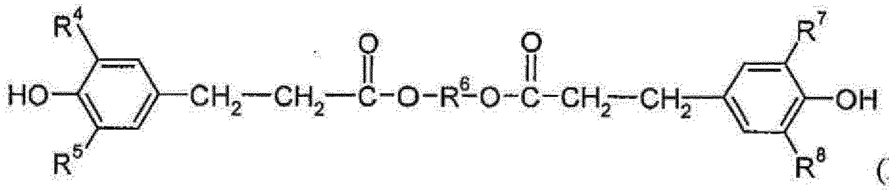

(III)

wobei $R^4$, $R^5$, $R^7$ und $R^8$ unabhängig voneinander $C_1$-$C_8$-Alkylgruppen darstellen, die ihrerseits substituiert sein können (mindestens eine davon ist eine sterisch anspruchsvolle Gruppe) und $R^6$ einen zweiwertigen aliphatischen Rest mit 1 bis 10 C-Atomen bedeutet, der in der Hauptkette auch C-O-Bindungen aufweisen kann.

**9.** Zusammensetzungen gemäß Anspruch 8, **dadurch gekennzeichnet, dass** die Thermostabilisatoren aus der Gruppe 2,2'-Methylen-bis-(4-methyl-6-tert.-butylphenol), 1,6-Hexandiolbis[3-(3,5-di-tert.-butyl-4-hydroxyphenyl)-propionat], Pentaerythrityl-tetrakis-[3-(3,5-di-tert.-butyl-4-hydroxyphenyl)-propionat], Distearyl-3,5-di-tert.-butyl-4-hydroxybenzylphosphonat, 2,6,7-Trioxa-1-phosphabicyclo-[2.2.2]oct-4-yl-methyl-3,5-di-tert.-butyl-4-hydroxy-hydrocinnamat, 3,5-Di-tert.-butyl-4-hydroxyphenyl-3,5-distearyl-thiotriazylamin, 2-(2'-Hydroxy-3'-hydroxy-3',5'-di-tert.-butylphenyl)-5-chlorbenzotriazol, 2,6-Di-tert.-butyl-4-hy-droxymethylphenol, 1,3,5-Trimethyl-2,4,6-tris-(3,5-di-tert.-butyl-4-hydroxybenzyl)-benzol, 4,4'-Methylen-bis-(2,6-di-tert.-butylphenol), 3,5-Di-tert.-butyl-4-hydroxybenzyldimethylamin ausgewählt werden.

**10.** Zusammensetzungen gemäß einem der Ansprüche 7 bis 9, **dadurch gekennzeichnet, dass** die Thermostabilisatoren aus der Gruppe 2,2'-Methylen-bis-(4-methyl-6-tert.-butylphenol), 1,6-Hexandiol-bis-[3-(3,5-di-tert.-butyl-4-hydroxyphenyl)-propionat], Pentaerythrityl-tetrakis-[3-(3,5-di-tert.-butyl-4-hydroxyphenyl)-propionat] und N,N'-Hexamethylen-bis-3,5-di-tert.-butyl-4-hydroxyhydrocinnamid ausgewählt werden.

**11.** Zusammensetzungen gemäß einem der Ansprüche 6 bis 9, **dadurch gekennzeichnet, dass** als Additiv das Pigment Titandioxid eingesetzt wird.

**12.** Erzeugnisse erhältlich durch Extrusion oder Spritzguss von Formmassen enthaltend die Zusammensetzungen gemäß einem der Ansprüche 1 bis 11.

**13.** Erzeugnisse gemäß Anspruch 12, **dadurch gekennzeichnet, dass** es sich um kurzzeitwärmeformbeständige Erzeugnisse für die Elektro- oder Elektronikindustrie handelt.

**14.** Verwendung der Zusammensetzungen gemäß einem der Ansprüche 1 bis 11, zur Herstellung von Erzeugnissen

für die Elektro- oder Elektronikindustrie.

**15.** Verwendung gemäß Anspruch 14, **dadurch gekennzeichnet, dass** der Einsatz der Zusammensetzungen zur Steigerung der Kurzzeitwärmeformbeständigkeit der Erzeugnisse dient.

**16.** Verfahren zur Herstellung kurzzeitwärmeformbeständiger Erzeugnisse, **dadurch gekennzeichnet, dass** Zusammensetzungen gemäß einem der Ansprüche 1 bis 11 zu Formmassen verarbeitet werden und diese einem Spritzguss oder einer Extrusion unterzogen werden.

## Claims

**1.** Compositions comprising

a) 15% to 90% by weight of nylon-6,6,
b) 3% to 30% by weight of nylon-4,6,
c) 5% to 70% by weight of glass fibres, and
d) 0.01% to 3% by weight of at least one thermal stabilizer,

where the sum total of all the percentages by weight of the components is always 100.

**2.** Compositions according to Claim 1, **characterized in that** they comprise 20% to 70% by weight of a), 5% to 25% by weight of b), 10% to 45% by weight of c) and 0.05% to 1.5% by weight of d), wherein the sum total of all the percentages by weight of the components is always 100.

**3.** Compositions according to Claim 1 or 2, **characterized in that** they comprise, in addition to components a), b), c) and d), also e) 0.01% to 5% by weight of dipentaerythritol and/or tripentaerythritol, in which case the levels of the other components are reduced to such an extent that the sum total of all the percentages by weight is always 100.

**4.** Compositions according to any of Claims 1 to 3, **characterized in that** they comprise, in addition to components a), b), c), d) and e) or instead of e), also f) 1% to 55% by weight of at least one flame retardant, in which case the levels of the other components are reduced to such an extent that the sum total of all the percentages by weight is always 100.

**5.** Compositions according to any of Claims 1 to 4, **characterized in that** they comprise, in addition to components a) to f) or instead of components e) and/or f), also g) 0.01% to 10% by weight of at least one additive having two epoxy groups per molecule, in which case the levels of the other components are reduced to such an extent that the sum total of all the percentages by weight is always 100.

**6.** Compositions according to any of Claims 1 to 5, **characterized in that** they comprise, in addition to components a) to g) or instead of components e) and/or f) and/or g), also h) 0.01% to 20% by weight of at least one additive other than components c) to g), in which case the levels of the other components are reduced to such an extent that the sum total of all the percentages by weight is always 100.

**7.** Compositions according to any of Claims 1 to 5, **characterized in that** these thermal stabilizers are selected from the group of the sterically hindered phenols, these being compounds having phenolic structure and having at least one sterically demanding group on the phenolic ring, sterically demanding groups being tert-butyl groups, isopropyl groups and aryl groups substituted by sterically demanding groups, preferably thermal stabilizers containing at least one structure of the formula (II)

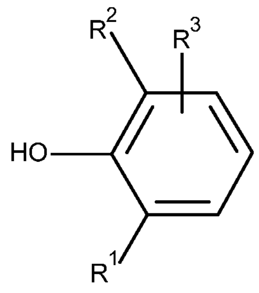

(II)

in which $R^1$ and $R^2$ are each an alkyl group, a substituted alkyl group or a substituted triazole group, where the $R^1$ and $R^2$ radicals may be the same or different and $R^3$ is an alkyl group, a substituted alkyl group, an alkoxy group or a substituted amino group.

8. Compositions according to Claim 7, **characterized in that** thermal stabilizers used are sterically hindered phenols derived from substituted benzenecarboxylic acids, preferably from substituted benzenepropionic acids, more preferably from compounds of the formula (III)

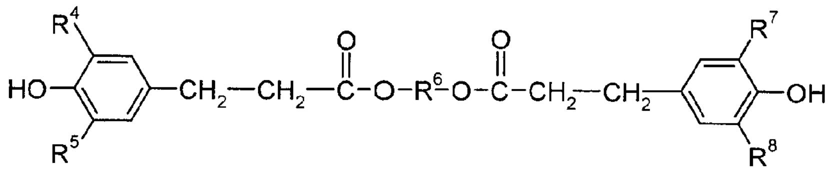

(III)

where $R^4$, $R^5$, $R^7$ and $R^8$ are each independently $C_1$-$C_8$-alkyl groups which may themselves be substituted (at least one of these is a sterically demanding group) and $R^6$ is a divalent aliphatic radical having 1 to 10 carbon atoms, which may also have C-O bonds in the main chain.

9. Compositions according to Claim 8, **characterized in that** the thermal stabilizers are selected from the group of 2,2'-methylenebis(4-methyl-6-tertbutylphenol), 1,6-hexanediyl bis[3-(3,5-di-tert-butyl-4-hydroxyphenyl)propionate], pentaerythrityl tetrakis[3-(3,5-di-tert-butyl-4-hydroxyphenyl)propionate], distearyl 3,5-di-tert-butyl-4-hydroxybenzylphosphonate, 2,6,7-trioxa-1-phosphabicyclo[2.2.2]oct-4-ylmethyl 3,5-di-tert-butyl-4-hydroxyhydrocinnamate, 3,5-di-tert-butyl-4-hydroxyphenyl-3,5-distearylthiotriazylamine, 2-(2'-hydroxy-3'-hydroxy-3',5'-di-tert-butylphenyl)-5-chlorobenzotriazole, 2,6-di-tert-butyl-4-hydroxymethylphenol, 1,3,5-trimethyl-2,4,6-tris(3,5-di-tert-butyl-4-hydroxybenzyl)benzene, 4,4'-methylenebis(2,6-di-tert-butylphenol), 3,5-di-tert-butyl-4-hydroxybenzyldimethylamine.

10. Compositions according to any of Claims 7 to 9, **characterized in that** the thermal stabilizers are selected from the group of 2,2'-methylenebis(4-methyl-6-tert-butylphenol), 1,6-hexanediyl bis[3-(3,5-di-tert-butyl-4-hydroxyphenyl)propionate], pentaerythrityl tetrakis[3-(3,5-di-tert-butyl-4-hydroxyphenyl)propionate] and N,N'-hexamethylenebis-3,5-di-tert-butyl-4-hydroxyhydrocinnamide.

11. Compositions according to any of Claims 6 to 9, **characterized in that** the pigment titanium dioxide is used as additive.

12. Products obtainable by extrusion or injection moulding of moulding compositions comprising the compositions according to any of Claims 1 to 11.

13. Products according to Claim 12, **characterized in that** they are products having short-term heat distortion resistance for the electrics or electronics industry.

14. Use of the compositions according to any of Claims 1 to 11 for production of products for the electrics or electronics industry.

15. Use according to Claim 14, **characterized in that** the use of the compositions serves to increase the short-term heat distortion resistance of the products.

**16.** Process for producing products having short-term heat distortion resistance, **characterized in that** compositions according to any of Claims 1 to 11 are processed to give moulding compositions and these are subjected to an injection moulding or extrusion operation.

**Revendications**

**1.** Compositions contenant :

a) 15 à 90 % en poids de polyamide 66,
b) 3 à 30 % en poids de polyamide 46,
c) 5 à 70 % en poids de fibres de verre, et
d) 0,01 à 3 % en poids d'au moins un thermostabilisateur,

la somme de tous les pourcentages en poids des composants étant toujours de 100.

**2.** Compositions selon la revendication 1, **caractérisées en ce que** celles-ci contiennent 20 à 70 % en poids de a), 5 à 25 % en poids de b), 10 à 45 % en poids de c), et 0,05 à 1,5 % en poids de d), la somme de tous les pourcentages en poids des composants étant toujours de 100.

**3.** Compositions selon la revendication 1 ou 2, **caractérisées en ce que** celles-ci contiennent en plus des composants a), b), c) et d) également e) 0,01 à 5 % en poids de dipentaérythritol et/ou de tripentaérythritol, les autres composants étant réduits de telle sorte que la somme de tous les pourcentages en poids soit toujours de 100.

**4.** Compositions selon l'une quelconque des revendications 1 à 3, **caractérisées en ce que** celles-ci contiennent en plus des composants a), b), c), d) et e) ou à la place de e) également f) 1 à 55 % en poids d'au moins un agent ignifuge, les autres composants étant réduits de telle sorte que la somme de tous les pourcentages en poids soit toujours de 100.

**5.** Compositions selon l'une quelconque des revendications 1 à 4, **caractérisées en ce que** celles-ci contiennent en plus des composants a) à f) ou à la place des composants e) et/ou f) également g) 0,01 à 10 % en poids d'au moins un additif contenant deux groupes époxy par molécule, les autres composants étant réduits de telle sorte que la somme de tous les pourcentages en poids soit toujours de 100.

**6.** Compositions selon l'une quelconque des revendications 1 à 5, **caractérisées en ce que** celles-ci contiennent en plus des composants a) à g) ou à la place des composants e) et/ou f) et/ou g) également h) 0,01 à 20 % en poids d'au moins un additif différent des composants c) à g), les autres composants étant réduits de telle sorte que la somme de tous les pourcentages en poids soit toujours de 100.

**7.** Compositions selon l'une quelconque des revendications 1 à 5, **caractérisées en ce que** celles-ci contiennent des thermostabilisateurs choisis dans le groupe des phénols à encombrement stérique, ceux-ci consistant en des composés de structure phénolique, qui comprennent au moins un groupe stériquement volumineux sur le cycle phénolique, des groupes stériquement volumineux étant des groupes tert.-butyle, des groupes isopropyle et des groupes aryle substitués avec des groupes stériquement volumineux, de préférence des thermostabilisateurs contenant au moins une structure de la formule (II),

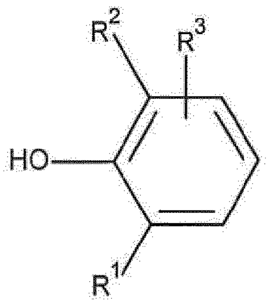

(II)

dans laquelle $R^1$ et $R^2$ représentent un groupe alkyle, un groupe alkyle substitué ou un groupe triazole substitué, les radicaux $R^1$ et $R^2$ pouvant être identiques ou différents, et $R^3$ représente un groupe alkyle, un groupe alkyle substitué, un groupe alcoxy ou un groupe amino substitué.

**8.** Compositions selon la revendication 7, **caractérisées en ce que** des phénols à encombrement stérique dérivés d'acides benzène-carboxyliques substitués, de préférence d'acides benzène-propioniques substitués, de manière particulièrement préférée de composés de la formule (III), sont utilisés en tant que thermostabilisateurs,

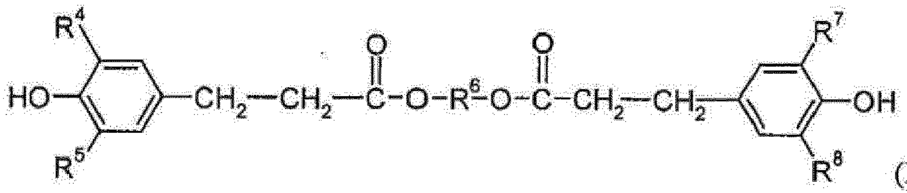

(III)

dans laquelle $R^4$, $R^5$, $R^7$ et $R^8$ représentent indépendamment les uns des autres des groupes alkyle en $C_1$-$C_8$, qui peuvent eux-mêmes être substitués (au moins un d'entre eux étant un groupe stériquement volumineux), et $R^6$ signifie un radical aliphatique bivalent de 1 à 10 atomes C, qui peut également comprendre des liaisons C-O dans la chaîne principale.

**9.** Compositions selon la revendication 8, **caractérisées en ce que** les thermostabilisateurs sont choisis dans le groupe constitué par le 2,2'-méthylène-bis-(4-méthyl-6-tert.-butylphénol), le bis[3-(3,5-di-tert.-butyl-4-hydroxyphényl)-propionate] de 1,6-hexane-diol, le tétrakis-[3-(3,5-di-tert.-butyl-4-hydroxyphényl)-propionate] de pentaérythrityle, le phosphonate de distéaryl-3,5-di-tert.-butyl-4-hydroxybenzyle, le 4-hydroxy-hydrocinnamate de 2,6,7-trioxa-1-phosphabicyclo-[2.2.2]oct-4-yl-méthyl-3,5-di-tert.-butyle, la 3,5-di-tert.-butyl-4-hydroxyphényl-3,5-distéaryl-thiotriazylamine, le 2-(2'-hydroxy-3'-hydroxy-3',5'-di-tert.-butylphényl)-5-chlorobenzotriazole, le 2,6-di-tert.-butyl-4-hydroxyméthylphénol, le 1,3,5-triméthyl-2,4,6-tris-(3,5-di-tert.-butyl-4-hydroxybenzyl)-benzène, le 4,4'-méthylène-bis-(2,6-di-tert.-butylphénol), la 3,5-di-tert.-butyl-4-hydroxybenzyldiméthylamine.

**10.** Compositions selon l'une quelconque des revendications 7 à 9, **caractérisées en ce que** les thermostabilisateurs sont choisis dans le groupe constitué par le 2,2'-méthylène-bis-(4-méthyl-6-tert.-butylphénol), le bis-[3-(3,5-di-tert.-butyl-4-hydroxyphényl)-propionate] de 1,6-hexane-diol, le tétrakis-[3-(3,5-di-tert.-butyl-4-hydroxyphényl)-propionate] de pentaérythrityle et le N,N'-hexaméthylène-bis-3,5-di-tert.-butyl-4-hydroxyhydrocinnamide.

**11.** Compositions selon l'une quelconque des revendications 6 à 9, **caractérisées en ce que** le pigment dioxyde de titane est utilisé en tant qu'additif.

**12.** Articles pouvant être obtenus par extrusion ou moulage par injection de matériaux de moulage contenant les compositions selon l'une quelconque des revendications 1 à 11.

**13.** Articles selon la revendication 12, **caractérisés en ce que** ceux-ci consistent en des articles à stabilité dimensionnelle à chaud à court terme pour l'industrie électrique ou électronique.

**14.** Utilisation des compositions selon l'une quelconque des revendications 1 à 11 pour la fabrication d'articles pour l'industrie électrique ou électronique.

**15.** Utilisation selon la revendication 14, **caractérisée en ce que** l'utilisation des compositions sert à augmenter la stabilité dimensionnelle à chaud à court terme des articles.

**16.** Procédé de fabrication d'articles à stabilité dimensionnelle à chaud à court terme, **caractérisé en ce que** des compositions selon l'une quelconque des revendications 1 à 11 sont transformées en matériaux de moulage, et ceux-ci sont soumis à un moulage par injection ou à une extrusion.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0997496 A1
- WO 2011126794 A2
- WO 2013188488 A2
- WO 2004090036 A1
- WO 9945070 A1
- WO 2013014144 A1
- DE 102011084519 A1
- DE 2702661 A
- US 4360617 A
- DE 4236122 A
- WO 9817720 A
- US 6538024 B
- DE 2035390 A
- US 3644574 A
- DE 2248242 A
- GB 1409275 A
- US 4937285 A
- DE 3704657 A
- US 4859740 A
- DE 3704655 A
- US 4861831 A
- DE 3631540 A
- US 4806593 A
- DE 3631539 A
- US 4812515 A


### In der Beschreibung aufgeführte Nicht-Patentliteratur


- Technische Thermoplaste. Polyamide. Hanser Verlag, 803-809
- **BODO CARLOWITZ.** Tabellarische Übersicht über die Prüfung von Kunststoffen. Giesel-Verlag, 1992, 16-17
- *CHEMICAL ABSTRACTS,* 32131-17-2
- **H. DOMININGHAUS.** Die Kunststoffe und ihre Eigenschaften. VDI-Verlag, 1976, 272 ff
- *CHEMICAL ABSTRACTS,* 50327-22-5 11
- *CHEMICAL ABSTRACTS,* 23128-74-7
- *CHEMICAL ABSTRACTS,* 126-58-9
- *CHEMICAL ABSTRACTS,* 78-24-0
- *CHEMICAL ABSTRACTS,* 1078142-02-5
- *CHEMICAL ABSTRACTS,* 225789-38-8
- *CHEMICAL ABSTRACTS,* 218768-84-4
- *CHEMICAL ABSTRACTS,* 1332-07-6
- *CHEMICAL ABSTRACTS,* 1675-54-3
- **GÄCHTER ; MÜLLER.** Kunststoff-Additive. Hanser-Verlag, 1989
- Plastics Additives Handbook. Hanser-Verlag, 2001
- *CHEMICAL ABSTRACTS,* 110-30-5
- *CHEMICAL ABSTRACTS,* 13463-67-7
- *CHEMICAL ABSTRACTS,* 14807-96-6
- **ULLMANN.** Enzyklopädie der Technischen Chemie. 1980, vol. 19, 280 ff
- *CHEMICAL ABSTRACTS,* 9003-56-9
- **THIELEN ; HARTWIG ; GUST.** Blasformen von Kunststoffhohlkörpern. Carl Hanser Verlag, 2006, 127-129